(19) Europäisches Patentamt
European Patent Office
Office européen des brevets

(11) **EP 4 188 027 A1**

(12) **EUROPEAN PATENT APPLICATION**
published in accordance with Art. 153(4) EPC

(43) Date of publication:
**31.05.2023 Bulletin 2023/22**

(21) Application number: **21854266.0**

(22) Date of filing: **03.08.2021**

(51) International Patent Classification (IPC):
*H04W 74/08* *(2009.01)*

(52) Cooperative Patent Classification (CPC):
**H04W 74/08**

(86) International application number:
**PCT/CN2021/110260**

(87) International publication number:
**WO 2022/028408 (10.02.2022 Gazette 2022/06)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **06.08.2020 CN 202010784243**

(71) Applicant: **Huawei Technologies Co., Ltd.**
**Longgang**
**Shenzhen, Guangdong 518129 (CN)**

(72) Inventors:
• XU, Chenlei
  Shenzhen, Guangdong 518129 (CN)
• ZHOU, Jianwei
  Shenzhen, Guangdong 518129 (CN)
• LUO, Hejia
  Shenzhen, Guangdong 518129 (CN)
• JIANG, Zhenjun
  Shenzhen, Guangdong 518129 (CN)
• QIAO, Yunfei
  Shenzhen, Guangdong 518129 (CN)

(74) Representative: **Gill Jennings & Every LLP**
**The Broadgate Tower**
**20 Primrose Street**
**London EC2A 2ES (GB)**

(54) **WIRELESS COMMUNICATION METHOD AND APPARATUS**

(57) Embodiments of this application provide a wireless communication method and apparatus. The method includes: determining, by a first communication apparatus, a first quantity N, where the first quantity is a total quantity of to-be-generated preamble sequences, the first quantity N is one of total quantities of at least two types of preamble sequences, and N is a positive integer; generating, by the first communication apparatus, N preamble sequences based on the first quantity N and a first cyclic shift value; and performing, by the first communication apparatus, random access by using one of the N preamble sequences. In this way, first communication apparatuses in different communication systems may determine a total quantity of preamble sequences that need to be generated in a random access process based on system features of the first communication apparatuses, so that a random access capability of the communication system may be improved. In a satellite communication system, initiating random access based on the determined first quantity may reduce a random access failure probability and reduce a communication access delay.

FIG. 4

**Description**

**CROSS-REFERENCE TO RELATED APPLICATIONS**

This application claims priority to Chinese Patent Application No. 202010784243.4, filed with the China National Intellectual Property Administration on August 6, 2020 and entitled "WIRELESS COMMUNICATION METHOD AND APPARATUS", which is incorporated herein by reference in its entirety.

**TECHNICAL FIELD**

This application relates to the field of communication technologies, and more specifically, to a communication method and apparatus for a random access process.

**BACKGROUND**

A 5th generation (5th Generation, 5G) system and a future evolved network of the 5th generation (5th Generation, 5G) system need to meet different service requirements, and further need to provide a wider service scope. A non-terrestrial network (non-terrestrial network, NTN) system may be introduced to an area that cannot be covered by a terrestrial communication network, such as an ocean or a forest, to provide a communication service. For example, a satellite communication system may be introduced. Compared with the terrestrial communication network, satellite communication has great advantages. The satellite communication has a long communication distance, a large coverage area, and a wide communication band, and may provide the communication service for a user anytime and anywhere. Therefore, the satellite communication is an inevitable trend of 5G communication, especially in international and domestic communication and emergency disaster relief.

Currently, the satellite communication differs greatly from terrestrial communication in terms of a communication protocol. To meet a communication requirement of a non-terrestrial communication network system, in the 5G communication, a non-terrestrial communication process needs to be redesigned, so that the non-terrestrial communication process may be integrated with the existing terrestrial communication without introducing high costs and complexity to a terminal device. During communication, the terminal device only needs to select a proper base station for communication based on a corresponding requirement.

In a process in which the terminal device and a network device perform normal communication, for example, perform a data exchange operation, the terminal device and the network device need to end establishment of a radio link through random access. In a random access process, a user can access a network in a contention manner. However, because access resources are limited, the process inevitably causes a collision between simultaneously accessed users, thereby reducing a system throughput, increasing a delay when the user accesses a system, and affecting system performance and access experience.

In a non-terrestrial communication system, a quantity of users in a coverage range of a single beam of the system differs greatly from a quantity of users served by a terrestrial communication system. If a specification of a terrestrial communication protocol is used, the access resources cannot meet a requirement of the non-terrestrial communication system. For example, in the satellite communication system, there are problems such as an increase in a collision probability of random access initiated by the user and an increase in an access delay.

For problems that the access resources existing in the non-terrestrial communication network system cannot meet the requirement of the non-terrestrial communication system, an access collision probability is high, and the access delay is long, a method for improving a random access capability of a communication system is proposed, to reduce the access collision probability of the satellite communication system and improve an access success probability.

**SUMMARY**

Embodiments of this application provide a wireless communication method, which may meet random access requirements of different communication systems.

According to a first aspect, a wireless communication method is provided, including: determining, by a first communication apparatus, a first quantity N, where the first quantity is a total quantity of to-be-generated preamble sequences, the first quantity N is one of total quantities of at least two types of preamble sequences, and N is a positive integer; generating, by the first communication apparatus, N preamble sequences based on the first quantity N and a first cyclic shift value; and sending, by the first communication apparatus, a first preamble sequence, where the first preamble sequence is one of the N preamble sequences, and the first preamble sequence is used for performing random access.

According to a solution provided in this application, the first communication apparatus generates the N preamble sequences based on the determined first quantity N and the determined first cyclic shift value, where the first quantity N is one of total quantities of the at least two types of preamble sequences, and the first communication apparatus selects one of the N preamble sequences to perform random access. The solution of this application provides a plurality of available first quantities N for the first communication apparatus to select, so that the communication system may determine, based on a system feature of the communication system, a total quantity of preamble sequences that needs to be generated in a random access process, thereby improving a random access capability of the communication system. Particularly, in a satellite communication system, there are a large quantity of terminal devices in a satellite service area. If the terminal devices perform random access by using a fixed total quantity of preamble sequences, a random access failure probability and a communication access delay are greatly increased. According to the method provided in this application, the foregoing scenario may be more effectively coped with, a random access collision probability may be reduced, and an access delay may be reduced.

In some possible implementations, the method further includes: receiving, by the first communication apparatus, a first index sent by a network device; determining, by the first communication apparatus, a second cyclic shift value based on the first index and a first correspondence, where the first correspondence is used for indicating a one-to-one mapping relationship between the first index and the second cyclic shift value; and determining, by the first communication apparatus, the first cyclic shift value based on a first coefficient and the second cyclic shift value.

Optionally, the plurality of cyclic shift values are cyclic shift values used in a second positioning precision or a terrestrial network.

Optionally, the first coefficient is used for indicating a ratio of a granularity of a cyclic shift value used in a first positioning precision to a granularity of a cyclic shift value used in the second positioning precision. The first positioning precision is a current positioning precision of the first communication apparatus, and the second cyclic shift value is the cyclic shift value used in the second positioning precision.

Optionally, the first coefficient is used for indicating a ratio of the granularity of the cyclic shift value used in the first positioning precision to a granularity of a cyclic shift value used in the terrestrial network. The first positioning precision is the current positioning precision of the first communication apparatus, and the second cyclic shift value is the cyclic shift value used in the terrestrial network.

Optionally, the first communication apparatus may determine the first quantity N based on the first coefficient and a second quantity. The second quantity is a total quantity of preamble sequences used in a second precision.

The first communication apparatus determines the first cyclic shift value through the first coefficient and the second cyclic shift value, and performs random access based on the first cyclic shift value and the first quantity, so that two parameters (that is, the cyclic shift value and the total quantity of preamble sequences) may be acquired by using one piece of signaling, thereby reducing signaling overheads. By using the configuration method, the network device (for example, a satellite) may flexibly configure a parameter for the terminal device, reducing a collision probability of a terminal in a random access process, reducing the access delay, and improving a random access capability of a system.

In some possible implementations, the first cyclic shift value may be determined by the first communication apparatus based on a cyclic shift mapping table, and the mapping table is a mapping relationship between an index value and a cyclic shift value. A cyclic shift value corresponding to each index value in the mapping table is less than or equal to a second cyclic shift value corresponding to a same index in the first correspondence, and the second cyclic shift value is a cyclic shift value in the first correspondence.

In some possible implementations, the first coefficient is specified in a communication protocol, or the first coefficient is indicated by the network device.

Optionally, the network device may send the first coefficient through a system message or RRC signaling.

Optionally, that the first coefficient is indicated by a second communication device may be that the first communication device receives second indication information sent by the second communication device. The second indication information is used for indicating the first coefficient. Specifically, the second indication information includes a second index, and the first communication apparatus determines the first coefficient based on the second index and a coefficient mapping table. The coefficient mapping table is a one-to-one mapping relationship between a plurality of index values and a plurality of coefficients.

In some possible implementations, the method further includes: receiving, by the first communication apparatus, a first index sent by a network device; and determining, by the first communication apparatus, a first cyclic shift value based on the first index, a first parameter, and a second correspondence, where the second correspondence is used for indicating a mapping relationship between the first index and a first cyclic shift value group, the first cyclic shift value group includes at least two cyclic shift values, the first parameter is used for determining the first cyclic shift value from the at least two cyclic shift values, and the first parameter is used for indicating a positioning precision currently used by the first communication apparatus or a currently to-be-accessed system.

Optionally, the second correspondence may record cyclic shift values corresponding to a plurality of precisions. A cyclic shift value group corresponds to cyclic shift values in a plurality of positioning precisions, that is, the cyclic shift value group is a set of cyclic shift values in different precisions.

Optionally, the second correspondence may further record cyclic shift values respectively used in a plurality of access systems. For example, the plurality of access systems may include a satellite communication system and a terrestrial network communication system.

Optionally, the cyclic shift value group may include two cyclic shift values, and the two cyclic shift values correspond to two types of different positioning precisions. When the first communication apparatus is in the satellite communication system, the first parameter is a positioning precision of the satellite communication system, and each mapping table records cyclic shift values respectively used in the two types of positioning precisions. Specifically, the two types of positioning precisions may be a positioning precision corresponding to the terrestrial network communication system and a positioning precision corresponding to the satellite communication system.

In some possible implementations, the determining, by the first communication apparatus, a first quantity N includes: receiving, by the first communication apparatus, first indication information sent by the network device. The first indication information is used for indicating the first quantity N.

Optionally, the first indication information includes broadcast information or unicast information.

In some possible implementations, the first quantity is greater than or equal to the second quantity, the second quantity is a total quantity of preamble sequences generated when the first communication apparatus communicates with the terrestrial network, and/or the first cyclic shift value is less than or equal to the second cyclic shift value. The second cyclic shift value is a cyclic shift value used for generating a preamble sequence when the first communication apparatus communicates with the terrestrial network.

In some possible implementations, N is one of 64, 128, 256, or 512.

In some possible implementations, before the generating, by the first communication apparatus, N preamble sequences based on the first quantity N and a first cyclic shift value, the method further includes: determining, by the first communication apparatus, that the first cyclic shift value meets a requirement of the current positioning precision of the first communication apparatus on a cyclic shift value.

It should be understood that the first communication apparatus may determine whether a first cyclic shift value specified by the network device meets the requirement based on the positioning precision of the first communication apparatus. When the first cyclic shift value meets the positioning precision of the first communication apparatus, the first communication apparatus generates a preamble sequence by using the first cyclic shift value. When the first cyclic shift value does not meet the positioning precision of the first communication apparatus, the first communication apparatus determines a third cyclic shift value and a total quantity of third preamble sequences based on the positioning precision of the first communication apparatus, and generates a preamble sequence based on the third cyclic shift value and the total quantity of third preamble sequences. The third cyclic shift value is greater than the first cyclic shift value.

In some possible implementations, the first preamble sequence is used by the first communication apparatus to perform random access on a first time domain resource. A first time-frequency resource corresponds to the first cyclic shift value; or a first time-frequency resource corresponds to the current positioning precision of the first communication apparatus; or a first time-frequency resource corresponds to a system to be accessed by the first communication apparatus; or a first time-frequency resource corresponds to the first quantity.

Optionally, the first communication apparatus may determine the first time domain resource based on indication information of the network device.

In some possible implementations, the first quantity is determined based on a positioning precision of a historically accessed terminal device of a network device to be accessed by the first communication apparatus; and/or the first cyclic shift value is determined based on the positioning precision of the historically accessed terminal device of the network device to be accessed by the first communication apparatus.

Optionally, the first communication apparatus is equipped with a global navigation positioning system and/or a multi-satellite assisted positioning system.

According to a second aspect, a wireless communication method is provided, including: determining, by a second communication apparatus, a first quantity N, where the first quantity is a total quantity of to-be-generated preamble sequences, the first quantity N is one of total quantities of at least two types of preamble sequences, and N is a positive integer; determining, by the second communication apparatus, a first cyclic shift value, where the first cyclic shift value is used by a first communication apparatus to generate N preamble sequences; and detecting, by the second communication apparatus, a first preamble sequence sent by the first communication apparatus that performs random access based on the first quantity N and the first cyclic shift value, where the first preamble sequence is one of the N preamble sequences.

In some possible implementations, the method further includes: sending, by the second communication apparatus, a first index, where the first index is used for indicating a second cyclic shift value, and the first index and the second cyclic shift value meet a first correspondence.

Optionally, the second cyclic shift value is a cyclic shift value used in a second positioning precision or a cyclic shift value used in a terrestrial network.

In some possible implementations, the method further includes: sending, by the second communication apparatus, a first coefficient to the first communication apparatus. The first coefficient is used by the first communication apparatus to determine the first cyclic shift value based on the second cyclic shift value.

Optionally, the first coefficient is used for indicating a ratio of a granularity of a cyclic shift value used in a first positioning precision to a granularity of a cyclic shift value used in the second positioning precision. The first positioning precision is a current positioning precision of the first communication apparatus, and the second cyclic shift value is the cyclic shift value used in the second positioning precision.

Optionally, the first coefficient is used for indicating a ratio of the granularity of the cyclic shift value used in the first positioning precision to a granularity of a cyclic shift value used in the terrestrial network. The first positioning precision is the current positioning precision of the first communication apparatus, and the second cyclic shift value is the cyclic shift value used in the terrestrial network.

Optionally, the first coefficient may be specified in a communication protocol.

Optionally, the second communication apparatus may send the first coefficient through a system message or RRC signaling.

In some possible implementations, the method further includes: sending, by the second communication apparatus, a first index to the first communication apparatus, where the first index is used for indicating a first cyclic shift value group, the first index and the first cyclic shift value group meet a second correspondence, the first cyclic shift value group includes at least two cyclic shift values, the at least two cyclic shift values include the first cyclic shift value, the first cyclic shift value corresponds to a first parameter, and the first parameter is used for indicating a positioning precision or a to-be-accessed system.

In some possible implementations, the second communication apparatus sends first indication information to the first communication apparatus. The first indication information is used for indicating the first quantity N.

Optionally, the first indication information includes broadcast information or unicast information.

In some possible implementations, the first quantity is greater than or equal to the second quantity, the second quantity is a total quantity of preamble sequences generated when the first communication apparatus communicates with the terrestrial network, and/or the first cyclic shift value is less than or equal to the second cyclic shift value. The second cyclic shift value is a cyclic shift value used for generating a preamble sequence when the first communication apparatus communicates with the terrestrial network.

In some possible implementations, N is one of 64, 128, 256, or 512.

In some possible implementations, the method further includes: allocating, by the second communication apparatus, a first time domain resource. The first time domain resource is used by the first communication apparatus to perform random access. A first time-frequency resource corresponds to the first cyclic shift value; or a first time-frequency resource corresponds to the current positioning precision of the first communication apparatus; or a first time-frequency resource corresponds to a system to be accessed by the first communication apparatus; or a first time-frequency resource corresponds to the first quantity.

Optionally, the second communication apparatus may indicate the first time domain resource to the first communication apparatus.

Optionally, the second communication apparatus may configure the first time domain resource based on distribution of a positioning precision of a historically accessed terminal device of a network device to be accessed by the first communication apparatus.

In some possible implementations, the first quantity is determined based on a positioning precision of a historically accessed terminal device of a network device to be accessed by the first communication apparatus; and/or the first cyclic shift value is determined based on the positioning precision of the historically accessed terminal device of the network device to be accessed by the first communication apparatus.

In some possible implementations, the second communication apparatus may configure a bit occupied by a random access response index RAPID to match a total quantity of first preamble sequences.

According to a third aspect, a communication apparatus is provided, including: a processing unit, configured to determine a first quantity N, where the first quantity is a total quantity of to-be-generated preamble sequences, the first quantity N is one of total quantities of at least two types of preamble sequences, and N is a positive integer; the processing unit being further configured to generate N preamble sequences based on the first quantity N and a first cyclic shift value; and a transceiver unit, configured to send a first preamble sequence, where the first preamble sequence is one of the N preamble sequences, and the first preamble sequence is used for performing random access.

In some possible implementations, the transceiver unit is further configured to receive a first index sent by a network device; the processing unit is further configured to determine a second cyclic shift value based on the first index and a first correspondence, where the first correspondence is used for indicating a one-to-one mapping relationship between the first index and the second cyclic shift value; and the processing unit is further configured to determine the first cyclic shift value based on a first coefficient and the second cyclic shift value.

It should be understood that the second cyclic shift value is a cyclic shift value used in a second positioning precision or a cyclic shift value used in a terrestrial network.

It should be understood that the first coefficient is used for indicating a ratio of a granularity of a cyclic shift value used in a first positioning precision to a granularity of a cyclic shift value used in the second positioning precision or the terrestrial network. The first positioning precision is a current positioning precision of the first communication apparatus, and the second cyclic shift value is the cyclic shift value used in the second positioning precision or the terrestrial network.

In some possible implementations, the first coefficient is specified in a communication protocol, or the first coefficient is indicated by the processing unit.

In some possible implementations, the transceiver unit is further configured to receive the first index sent by the network device; the processing unit is further configured to determine the first cyclic shift value based on the first index, a first parameter, and a second correspondence, where the second correspondence is used for indicating a mapping relationship between the first index and a first cyclic shift value group, the first cyclic shift value group includes at least two cyclic shift values, the first parameter is used for determining the first cyclic shift value from the at least two cyclic shift values, and the first parameter is used for indicating a positioning precision currently used by the processing unit or a currently to-be-accessed system.

In some possible implementations, the determining, by the processing unit, a first quantity N includes: receiving, by the transceiver unit, first indication information sent by a network device; and determining, by the processing unit, the first quantity N based on the first indication information.

In some possible implementations, the first quantity is greater than or equal to the second quantity, the second quantity is a total quantity of preamble sequences generated when the first communication apparatus communicates with the terrestrial network, and/or the first cyclic shift value is less than or equal to the second cyclic shift value. The second cyclic shift value is a cyclic shift value used for generating a preamble sequence when the first communication apparatus communicates with the terrestrial network.

In some possible implementations, N is one of 64, 128, 256, or 512.

In some possible implementations, before the generating, by the processing unit, N preamble sequences based on the first quantity N and the first cyclic shift value, the method further includes: determining, by the processing unit, that the first cyclic shift value meets a requirement of the current positioning precision of the processing unit on the cyclic shift value.

In some possible implementations, the first preamble sequence is used by the communication apparatus to perform random access on a first time domain resource. A first time-frequency resource corresponds to the first cyclic shift value; or a first time-frequency resource corresponds to the current positioning precision of the first communication apparatus; or a first time-frequency resource corresponds to a system to be accessed by the first communication apparatus; or a first time-frequency resource corresponds to the first quantity.

In some possible implementations, the first quantity is determined based on a positioning precision of a historically accessed terminal device of a network device to be accessed by the processing unit; and/or the first cyclic shift value is determined based on the positioning precision of the historically accessed terminal device of the network device to be accessed by the processing unit.

According to a fourth aspect, a communication apparatus is provided, including: a processing unit, configured to determine a first quantity N, where the first quantity is a total quantity of to-be-generated preamble sequences, the first quantity N is one of total quantities of at least two types of preamble sequences, and N is a positive integer; and the processing unit is further configured to determine a first cyclic shift value, where the first cyclic shift value is used by a first communication apparatus to generate N preamble sequences; and a transceiver unit, configured to receive a first preamble sequence sent by the first communication apparatus, where the first preamble sequence is one of the N preamble sequences, and the first quantity N and the first cyclic shift value are used by the communication apparatus to detect the first preamble sequence.

In some possible implementations, the transceiver unit is further configured to send a first index. The first index is used for indicating a second cyclic shift value, and the first index and the second cyclic shift value meet a first correspondence.

In some possible implementations, the transceiver unit is further configured to indicate a first coefficient to the first communication apparatus. The first coefficient is used for determining the first cyclic shift value based on the second cyclic shift value.

In some possible implementations, the transceiver unit is further configured to send a first index to the first communication apparatus, where the first index is used for indicating a first cyclic shift value group, the first index and the first cyclic shift value group meet a second correspondence, the first cyclic shift value group includes at least two cyclic shift values, the at least two cyclic shift values include the first cyclic shift value, the first cyclic shift value corresponds to a first parameter, and the first parameter is used for indicating a positioning precision or a to-be-accessed system.

In some possible implementations, the transceiver unit is further configured to send first indication information to the first communication apparatus. The first indication information is used for indicating the first quantity N.

In some possible implementations, the first quantity is greater than or equal to the second quantity, the second quantity is a total quantity of preamble sequences generated when the first communication apparatus communicates with the terrestrial network, and/or the first cyclic shift value is less than or equal to the second cyclic shift value. The second cyclic shift value is a cyclic shift value used for generating a preamble sequence when the first communication apparatus communicates with the terrestrial network.

In some possible implementations, N is one of 64, 128, 256, or 512.

In some possible implementations, the processing unit is further configured to determine a first time domain resource. The first time domain resource is used by the first communication apparatus to perform random access. A first time-frequency resource corresponds to the first cyclic shift value; or a first time-frequency resource corresponds to the current positioning precision of the first communication apparatus; or a first time-frequency resource corresponds to a system to be accessed by the first communication apparatus; or a first time-frequency resource corresponds to the first quantity.

In some possible implementations, the first quantity is determined based on a positioning precision of a historically accessed terminal device of a network device to be accessed by the first communication apparatus; and/or the first cyclic shift value is determined based on the positioning precision of the historically accessed terminal device of the network device to be accessed by the first communication apparatus.

According to a fifth aspect, a wireless communication method is provided, including: determining, by a first communication apparatus, a first area, where the first area is an area in which the first communication apparatus is located, and the first area is one of a plurality of areas; determining, by the first communication apparatus, a first access resource corresponding to the first area in which the first communication apparatus is currently located; and initiating, by the first communication apparatus, random access by using the first access resource.

According to a solution provided in this application, the first communication apparatus selects a corresponding access resource based on positioning information of the first communication apparatus, and initiates a contention-based random access process based on the access resource. Therefore, a collision in the random access process may be effectively avoided, an average time of random access in a service range of a network device is increased, and user experience is improved.

Optionally, the plurality of areas include at least one adjacent beam handover area, and the first communication apparatus located in the adjacent beam handover area may complete random access in a first time period. The first time period is a time at which the first communication apparatus initiates random access once, that is, completes access.

In some possible implementations, the method further includes: receiving, by the first communication apparatus, first indication information sent by the network device. The first indication information is used for indicating a mapping relationship between the plurality of areas and a plurality of access resources.

Optionally, the plurality of access resources include a dedicated access resource, and the dedicated resource corresponds to the adjacent beam handover area.

Optionally, the adjacent beam handover area may correspond to the plurality of access resources.

In some possible implementations, the determining, by the first communication apparatus, a first area includes: determining, by the first communication apparatus, the first area based on a coverage area of a first beam and a coverage area of a second beam. The first beam is a beam covering a current location of the first communication apparatus, and the second beam is a beam covering the current location of the first communication apparatus in a next time period.

Optionally, the first communication apparatus is equipped with a global navigation positioning system and/or a multi-satellite auxiliary positioning system. The global navigation positioning system and/or the multi-satellite auxiliary positioning system are/is configured to determine a first location of the first communication apparatus.

Optionally, the first communication apparatus may determine the first area based on a first distance and a second distance. The first distance is a distance between the first location and a first beam location, and the second distance is a distance between the first location and a second beam location. It should be understood that a beam location may be a beam center location or a beam focus location. For example, in a case of a circular beam, the beam location is a circle center location of the circular beam; and in a case of an elliptical beam, the beam location is a focus location of the elliptical beam.

Optionally, the first communication apparatus receives a threshold sent by the network device, and determines the first area based on a relationship between the threshold and the first distance and the second distance.

In some possible implementations, the access resource is a time-frequency resource PO of a physical random access channel and/or a total quantity of preamble sequences.

According to a sixth aspect, a wireless communication method is provided, including: performing, by a network device, random access with a first communication apparatus by using a first access resource.

It should be understood that the first communication apparatus may initiate random access by using the first access resource, and correspondingly, the network device communicates with the first communication apparatus based on the first access resource.

According to a solution provided in this application, a second communication device may be preconfigured.

In some possible implementations, the method further includes: sending, by the network device, first indication information. The first indication information is used for indicating a mapping relationship between a plurality of areas and a plurality of access resources.

It should be understood that the network device may reconfigure the access resources.

Optionally, the network device configures each of the plurality of access resources as the plurality of access resources. For example, one of the plurality of access resources is a total quantity of preamble sequences. The network device may configure a specific quantity of preamble sequences in the total quantity of preamble sequences as a dedicated access resource in an adjacent beam handover area. The specific quantity may be estimated by the second communication device based on a historical access record of a terminal device in a beam coverage range.

Optionally, the network device may identify an access request of the adjacent beam handover area based on the access resource, and optimize an access manner of the adjacent beam handover area by using a dedicated backoff algorithm and a backoff indicator.

According to a solution provided in this application, the network device optimizes the access resources, so that the access resources tilt toward the adjacent beam handover area, thereby reducing an average access time of all to-be-accessed apparatuses in the beam coverage range, and ensuring that the to-be-accessed apparatuses (the first communication apparatuses) have close access delays.

In some possible implementations, the network device sends beam information of a first beam and a second beam. The beam information is used by the first communication apparatus to determine a first area, the first area is an area in which the first communication apparatus is located, the first beam is a beam covering a current location of the first communication apparatus, and the second beam is a beam covering the current location of the first communication apparatus in a next time period.

In some possible implementations, the access resource is a time-frequency resource PO of a physical random access channel and/or a total quantity of preamble sequences.

According to a seventh aspect, a communication apparatus is provided, including: a processing unit, configured to determine a first area, where the first area is an area in which the first communication apparatus is located, and the first area is one of a plurality of areas; and the processing unit is further configured to determine a first access resource corresponding to the first area in which the first communication apparatus is currently located; and a transceiver unit, configured to perform random access by using the first access resource.

In some possible implementations, the transceiver unit receives first indication information sent by a network device. The first indication information is used for indicating a mapping relationship between a plurality of areas and a plurality of access resources.

In some possible implementations, the processing unit is configured to determine the first area based on a coverage area of a first beam and a coverage area of a second beam. The first beam is a beam covering a current location of the first communication apparatus, and the second beam is a beam covering the current location of the first communication apparatus in a next time period.

In some possible implementations, the access resource is a time-frequency resource PO of a physical random access channel and/or a total quantity of preamble sequences.

According to an eighth aspect, a communication apparatus is provided, including a processing unit, configured to determine a first access resource. The first access resource is used by a first communication apparatus to perform random access with a network device.

In some possible implementations, the communication apparatus further includes: a transceiver unit, configured to send first indication information. The first indication information is used for indicating a mapping relationship between a plurality of areas and a plurality of access resources.

In some possible implementations, the transceiver unit is further configured to send beam information of a first beam and a second beam. The beam information is used by the first communication apparatus to determine a first area, the first area is an area in which the first communication apparatus is located, the first beam is a beam covering a current location of the first communication apparatus, and the second beam is a beam covering the current location of the first communication apparatus in a next time period.

In some possible implementations, the access resource is a time-frequency resource PO of a physical random access channel and/or a total quantity of preamble sequences.

According to a ninth aspect, a communication apparatus is provided, including modules or units configured to perform the method in the first aspect or any possible implementation of the first aspect.

According to a tenth aspect, a communication apparatus is provided, including modules or units configured to perform the method in the second aspect or any possible implementation of the second aspect.

According to an eleventh aspect, a communication apparatus is provided, including modules or units configured to perform the method in the fifth aspect or any possible implementation of the fifth aspect.

According to a twelfth aspect, a communication apparatus is provided, including modules or units configured to perform the method in the sixth aspect or any possible implementation of the sixth aspect.

According to a thirteenth aspect, a communication apparatus is provided, including a processor. The processor is coupled to a memory, and may be configured to execute instructions in the memory, to implement the method in the first aspect and possible implementations of the first aspect or the fifth aspect and possible implementations of the fifth aspect. Optionally, the communication device further includes a memory. Optionally, the communication device further includes a communication interface, and a processor is coupled to the communication interface. Optionally, a transceiver may be a transceiver circuit. Optionally, an input/output interface may be an input/output circuit.

In an implementation, the communication device is a terminal device. When the communication device is a terminal device, the communication interface may be a transceiver or an input/output interface. Optionally, a transceiver may be a transceiver circuit. Optionally, an input/output interface may be an input/output circuit.

In another implementation, the communication device is a chip or a chip system. When the communication device is a chip or a chip system, the communication interface may be an input/output interface, an interface circuit, an output circuit, an input circuit, a pin, a related circuit, or the like on the chip or the chip system. The processor may alternatively be embodied as a processing circuit or a logic circuit.

According to a fourteenth aspect, a communication device is provided, including a processor. The processor is coupled to a memory, and may be configured to perform the method in the first aspect and possible implementations of the first aspect or the sixth aspect and possible implementations of the sixth aspect. Optionally, a communication device further includes a memory. Optionally, the communication device further includes a communication interface, and a processor is coupled to the communication interface. Optionally, the communication device further includes a communication interface, and a processor is coupled to the communication interface.

In an implementation, the communication device is a satellite. When the communication device is a satellite, the communication interface may be a transceiver or an input/output interface.

In another implementation, the communication device is a chip or a chip system. When the communication device is a chip or a chip system, the communication interface may be an input/output interface, an interface circuit, an output circuit, an input circuit, a pin, a related circuit, or the like on the chip or the chip system. The processor may alternatively be embodied as a processing circuit or a logic circuit.

According to a fifteenth aspect, a communication apparatus is provided, including: an input circuit, an output circuit, and a processing circuit. The processing circuit is configured to receive a signal through the input circuit, and transmit a signal through the output circuit, so that the method in the first aspect, the second aspect, the fifth aspect, the sixth aspect, and any possible implementation of the foregoing aspects is implemented.

In a specific implementation process, the communication apparatus may be a chip. The input circuit may be an input pin. The output circuit may be an output pin. The processing circuit may be a transistor, a gate circuit, a trigger, any logic circuit, or the like. An input signal received by the input circuit may be received and input by, for example, but not limited to, a receiver. A signal outputted by the output circuit may be outputted to, for example, but not limited to, a transmitter and transmitted by the transmitter. In addition, the input circuit and the output circuit may be different circuits. Alternatively, the input circuit and the output circuit may be a same circuit. In this case, the circuit is used as the input circuit and the output circuit at different moments. Specific implementations of a processor and circuits are not limited in the embodiments of this application.

According to a sixteenth aspect, a processing apparatus is provided, including a processor and a memory. The processor is configured to read instructions stored in the memory, receive a signal through a receiver, and transmit a signal through a transmitter, to perform the method in the first aspect, the second aspect, the fifth aspect, the sixth aspect, and any possible implementation of the foregoing aspects.

Optionally, there are one or more processors, and there are one or more memories.

Optionally, the memory may be integrated into the processor, or the memory and the processor are separately disposed.

In a specific implementation process, the memory may be a non-transitory (non-transitory) memory, for example, a read-only memory (read-only memory, ROM). The memory and the processor may be integrated into a same chip, or may be disposed on different chips. A type of the memory and a manner in which the memory and the processor are disposed are not limited in this embodiment of this application.

It should be understood that, a related data exchange process such as sending of indication information may be a process of outputting the indication information from the processor, and receiving of capability information may be a process of receiving input capability information by the processor. Specifically, data outputted by the processor may be outputted to a transmitter, and input data received by the processor may be from a receiver. The transmitter and the receiver may be collectively referred to as a transceiver.

The processor according to the sixteenth aspect may be a chip. The processor may be implemented by using hardware or software. When the processor is implemented by using the hardware, the processor may be a logic circuit, an integrated circuit, or the like; and when the processor is implemented by using the software, the processor may be a general-purpose processor, and is implemented by reading software code stored in the memory. The memory may be integrated into the processor, or may exist independently outside the processor.

According to a seventeenth aspect, a computer program product is provided, including: a computer program (which may also be referred to as code or instructions). When the computer program is run, a computer is enabled to perform the method in the first aspect, the second aspect, the fifth aspect, or the sixth aspect, and any possible implementation of the foregoing aspects.

According to an eighteenth aspect, a computer-readable storage medium is provided, storing a computer program (which may also be referred to as code or instructions). When the computer program is run on a computer, the computer is enabled to perform the method in the first aspect, the second aspect, the fifth aspect, or the sixth aspect, and any possible implementation of the foregoing aspects.

According to a nineteenth aspect, a communication system is provided, including the foregoing satellite and terminal device.

## BRIEF DESCRIPTION OF DRAWINGS

FIG. 1 is a schematic diagram of an example of a communication system to which a wireless communication method in this application is applicable;

FIG. 2 is a schematic diagram of another example of a communication system to which a wireless communication method in this application is applicable;

FIG. 3 is a schematic flowchart of an example of a wireless communication method according to this application;

FIG. 4 is a schematic flowchart of another example of a wireless communication method according to this application;

FIG. 5 is a schematic flowchart of an example of determining a cyclic shift value in a wireless communication method according to this application;

FIG. 6 is a schematic flowchart of another example of determining a cyclic shift value in a wireless communication method according to this application;

FIG. 7 is a schematic flowchart of yet another example of a wireless communication method according to this application;

FIG. 8 is a schematic flowchart of yet another example of a wireless communication method according to this application;

FIG. 9 is a schematic diagram of a preamble sequence index and a synchronization location in a wireless communication method according to this application;

FIG. 10 is a schematic flowchart of yet another example of a wireless communication method according to this application;

FIG. 11 is a schematic diagram of possible beam area division according to this application;

FIG. 12 is a schematic diagram of a location of a first communication apparatus in a communication system according to this application;

FIG. 13 is a schematic diagram of an example of beam area division according to this application;

FIG. 14 is a schematic block diagram of a communication apparatus according to an embodiment of this application;

FIG. 15 is another schematic block diagram of a communication apparatus according to an embodiment of this application;

FIG. 16 is yet another schematic block diagram of a communication apparatus according to an embodiment of this application; and

FIG. 17 is yet another schematic block diagram of a communication apparatus according to an embodiment of this application.

## DESCRIPTION OF EMBODIMENTS

The following describes technical solutions of embodiments in this application with reference to accompanying drawings.

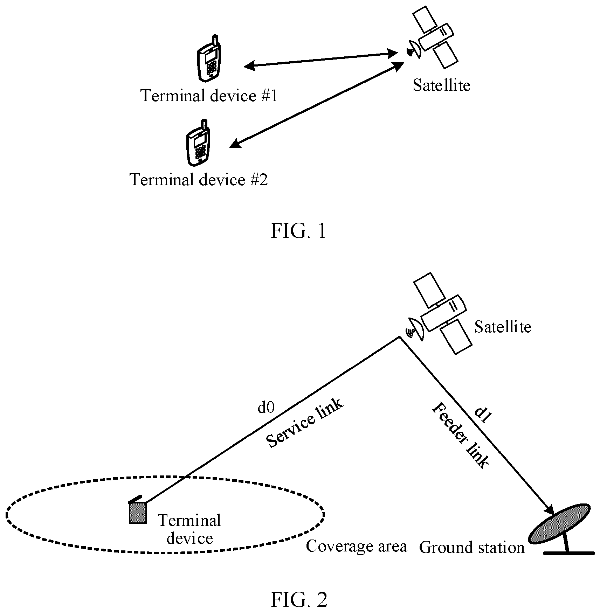

FIG. 1 is a schematic diagram of an architecture of a communication system applicable to an embodiment of this application. As shown in FIG. 1, the communication system may include at least one second communication apparatus, for example, the network device shown in FIG. 1. The communication system may further include at least one first communication apparatus. For example, FIG. 1 shows two first communication apparatuses: a terminal device #1 and a terminal device #2. The second communication apparatus (satellite) may communicate with the first communication apparatus through a radio link.

The technical solution in the embodiments of this application may be applied to various communication systems, for example, a long term evolution (long term evolution, LTE) system, an LTE frequency division duplex (frequency division duplex, FDD) system, an LTE time division duplex (time division duplex, TDD) system, a universal mobile telecommunication system (universal mobile telecommunication system, UMTS), a worldwide interoperability for microwave access (worldwide interoperability for microwave access, WiMAX) communication system, a future 5th generation (5th generation, 5G) system or new radio (new radio, NR), a device-to-device (device-to-device, D2D) communication system, a machine-to-machine communication system, an Internet of Vehicles communication system, a non-terrestrial network (non-terrestrial network, NTN) satellite communication system, a future communication system, or the like. This is not limited in the embodiments of this application.

It should be understood that the second communication apparatus in the wireless communication system may be any device having a wireless transceiver function. The device includes but is not limited to: an evolved NodeB (evolved NodeB, eNB, or eNodeB), a radio network controller (radio network controller, RNC), a NodeB (NodeB, NB), a base station controller (base station controller, BSC), a base transceiver station (base transceiver station, BTS), a home base station (for example, a home evolved NodeB or a home NodeB, HNB), a base band unit (base band unit, BBU), an access point (access point, AP) in a wireless fidelity (wireless fidelity, WIFI) system, a wireless relay node, a wireless backhaul node, a transmission point (transmission point, TP), a transmission and reception point (transmission and reception point, TRP), or the like. Alternatively, the device may be 5G, for example, NR, a gNB in a system, a transmission point (TRP or TP), or one or a group of (including a plurality of antenna panels) antenna panels of a base station in a 5G system. Alternatively, the device may be a network node forming a gNB or a transmission point, for example, a base band unit (BBU) or a distributed unit (distributed unit, DU), or the second communication apparatus may be a chip having a communication function, or the like. Alternatively, the device may be a satellite, a device that undertakes a base station function in device-to-device (device-to-device, D2D), vehicle-to-everything (vehicle-to-everything, V2X), machine-to-machine (machine-to-machine, M2M) communication, or the like. For ease of description, the technical solution of this application is described in detail by using a satellite communication system and a network device (that is, the second communication apparatus) as an example. The network device in the satellite communication system may include a satellite.

It should be further understood that the first communication apparatus is a device that communicates with a network device. The first communication apparatus may be a terminal device, a chip, or the like that has a communication function. The terminal device may also be referred to as user equipment (user equipment, UE), an access terminal, a subscriber unit, a subscriber station, a mobile station, a remote station, a remote terminal, a mobile device, a user terminal, a terminal, a wireless communication device, a user agent, or a user apparatus. The terminal device in the embodiments of this application may be a mobile phone (mobile phone), a satellite phone, a cellular phone, a cordless phone, a session initiation protocol (session initiation protocol, SIP) phone, a tablet computer (tablet computer), a computer having a wireless transceiver function, a wireless local loop (wireless local loop, WLL) station, a personal digital assistant (personal digital assistant, PDA), a virtual reality (virtual reality, VR) terminal device, an augmented reality (augmented reality, AR) terminal device, a wireless terminal in industrial control (industrial control), a wireless terminal in self driving (self driving), or a wireless terminal in remote medical (remote medical), a wireless terminal in a smart grid (smart grid), a wireless terminal in transportation safety (transportation safety), a wireless terminal in a smart city (smart city), a wireless terminal in a smart home (smart home), a terminal device in a 5G network, a terminal device in a future evolved public land mobile network (public land mobile network, PLMN), or the like. Application scenarios are not limited in the embodiments of this application. The terminal device may further be a chip having a communication function, or the like. This is not limited in this embodiment of this application. For ease of description, the technical solution of this application is described in detail by using the terminal device (that is, the first communication apparatus) as an example.

FIG. 2 is a schematic diagram of a transparent forwarding mode. As shown in FIG. 2, a satellite forwards an uplink signal to a ground station in a forwarding manner. A communication distance between a user and the ground station includes a service link and a feeder link. In a communication scenario in which the satellite transparently transmits a user signal to the ground station to implement wide-area coverage, an optional technical solution is to use a protocol stack compatible with 3 GPP LTE/NR. The terminal device may be an ordinary mobile terminal, a dedicated terminal, or the like, and a transmission process also follows the LTE/NR protocol.

Each of the communication systems shown in FIG. 1 and FIG. 2 has a long communication distance, a large coverage area, and a wide communication band, and may provide a more flexible communication service for the terminal device in time and space. In the communication systems shown in FIG. 1 and FIG. 2, to establish a radio link and exchange data with the network device, the terminal device needs to complete uplink access through random access. Random access may either be contention-based or contention-free. The contention-based random access has a risk of user collision, and is mainly applied to service scenarios such as initial access, recovery of a radio link failure state, and sending of uplink data in an uplink out-of-synchronization state. For ease of description, without causing ambiguity, the contention-based random access is referred to as random access in the following description.

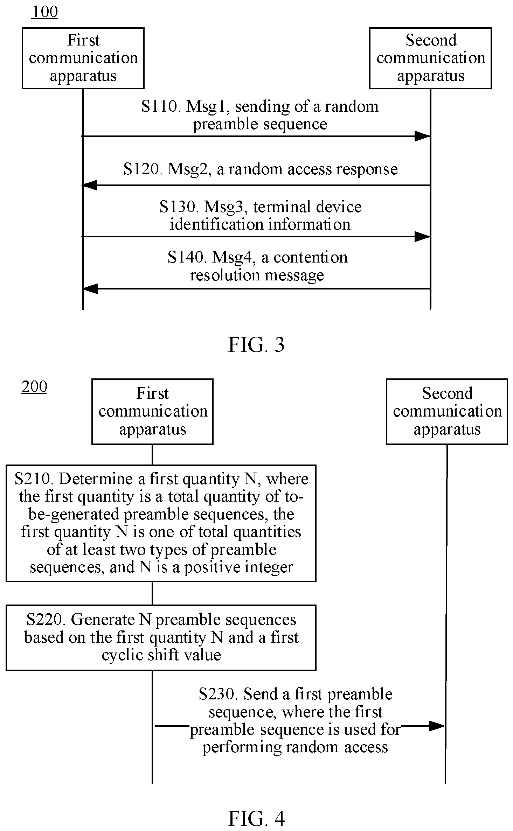

FIG. 3 is a schematic flowchart of a random access process 100 according to an embodiment of this application. As shown in FIG. 3, a method 100 for establishing a radio link between a network side and a terminal in a contention-based random access process includes the following steps.

S 110. A first communication apparatus sends a random preamble sequence first message (Message, Msg) Msg1 to a network device.

A terminal device (an example of the first communication apparatus) selects a time-frequency resource (PRACH occasion, PO) of a physical random access channel (physical random access channel, PRACH) to transmit a preamble sequence (that is, the Msg1). The network device acquires, by detecting the preamble sequence sent by the terminal device, a random access preamble identity (random access preamble identity, RAPID) corresponding to the preamble sequence sent by the terminal device and a downlink sending beam, and estimates a transmission delay of the terminal device. The RAPID is one of preamble sequence indexes.

It should be understood that a 5G NR system supports beamforming by default, and a random access process in the mode is a beam-based access process. During downlink synchronization, the terminal device needs to receive and detect a synchronization signal block (synchronization signal block, SSB) index with a strongest signal, and determine a downlink beam, and acquire an available PRACH time-frequency resource and a preamble sequence set based on a mapping relationship that is between the SSB index and a PRACH time-frequency resource and that is indicated by a system message (synchronization signal block, SIB).

It should be further understood that when initiating random access, the terminal device randomly selects, from the preamble sequence set, an access resource used for sending the Msg1. After receiving the Msg1 sent by the terminal device, the network device determines a beam used for subsequent downlink transmission based on a mapping relationship between the PRACH time-frequency resource and the SSB index.

S120. A second communication apparatus sends a second message Msg2.

The network device (that is, the second communication apparatus) delivers a random access response (random access response, RAR) message (that is, the Msg2) on a physical downlink shared channel (physical downlink shared channel, PDSCH). The RAR includes a timing advance (timing advance, TA) value, a random access preamble identity (random access preamble identity, RAPID), a temporary cell radio network temporary identifier (temporary cell radio network temporary identifier, TC-RNTI), and an initial uplink resource grant of the terminal device. The TA value is used by the terminal device to adjust sending timing of uplink data. The TA value corresponds to a transmission delay of the terminal device estimated by the network device in S110. The initial uplink resource grant is used for scheduling an uplink resource of the terminal device.

It should be understood that the network device transmits the Msg2 on the downlink sending beam determined in S110.

S130. The first communication apparatus sends a third message Msg3.

The terminal device receives the RAR message sent by the network device, and sends the Msg3 based on scheduling of the initial uplink resource carried in the RAR. The Msg3 carries identification information of the terminal device.

S140. The second communication apparatus sends a fourth message Msg4.

The network device sends a contention resolution message (that is, the Msg4) to the terminal device through the PDSCH. The network device transmits the Msg4 by using the downlink sending beam determined in S110. The terminal device receives the contention resolution message, and starts a contention resolution process. Contention and a conflict that are caused when a plurality of terminal devices attempt to access the network device by using a same random access resource and a same preamble sequence may be resolved.

In a process of establishing a radio link between the terminal device and the network device, an implementable technical solution is to use a contention-based random access manner. In the manner, there are 64 different preamble sequences in total to support a plurality of terminal devices in initiating random access requests to the network device. In the manner, a total quantity of preamble sequences for random access is fixed, and cannot be better applicable to different communication systems. Based on this, this application provides different total quantities of preamble sequences selected by different communication systems, to meet a requirement of random access of a plurality of terminal devices in different communication systems.

It may be understood that in the foregoing solution in which the 64 preamble sequences are used by the plurality of terminal devices to initiate random access, a probability that a collision occurs when the terminal devices perform random access increases as a quantity of terminal devices in a coverage range of a single cell increases. As a result, random access delays of the terminal devices increase.

For example, FIG. 1 is a schematic diagram of an architecture of a communication system applicable to an embodiment of this application, for example, a non-terrestrial network NTN system. One beam of a satellite may correspond to one cell, or a plurality of adjacent beams correspond to one cell. A coverage range of a cell is large. Correspondingly, there may be more terminal devices in a beam coverage range. Due to an increase in terminal devices, a system is prone to a case in which resources are insufficient, and a random access capability of the system decreases. For ease of description, the technical solution of this application is described in detail by using the satellite communication system as an example.

The following provides a specific example to quantify a relationship between a random access resource configuration and a quantity of users in the satellite communication system.

A maximum terminal density supported by the random access resource may be represented by the following relation:

a maximum terminal density=a supported maximum quantity of RACH attempts/(a coverage range×a quantity of RACH attempts of each terminal)

It is assumed that random access channel (random access channel, RACH) resources in a coverage area (a satellite cell or a satellite beam) are independently configured, preamble sequences of two lengths 839 and 139 are used, and maximum resource configurations in a case of a low frequency range (frequency range 1, FR1), a high frequency range (frequency range 2, FR2), a symmetric spectrum, and an asymmetric spectrum are comprehensively considered. When a user collision probability of 1% is met, a supported maximum quantity of RACH attempts in the coverage area is shown in Table 1.

**Table 1**

| Sequence length | Maximum time domain density (quantity/ millisecond) | Maximum frequency domain density | Maximum time-frequency density (quantity/second) | Supported maximum RACH quantity of times (quantity of times/ second/beam) |
|---|---|---|---|---|
| 839 | 1 | 8 | 1*8*64*1000=512000 | -512000*ln(1-0.01)=5146 |
| 139 | 14 | 8 | 14*8*64*1000=7168000 | -7168000*ln(1-0.01)=72041 |

The time domain density in Table 1 has reached that all subframes in a time domain are used for RACH resources, the frequency domain density is a configurable maximum value, and a quantity of available preamble sequences in each time-frequency resource is 64.

In addition, a reasonable assumption of an average quantity of RACH attempts of the terminal device is 0.001667 times/second/terminal device (that is, each terminal device performs one RACH attempt every 10 minutes), and an area of a coverage area is set to a beam with a minimum diameter and a beam with a maximum diameter that are defined in 3GPP. The supported maximum terminal density is shown in Table 2. It may be found that when a beam diameter is large, the supported maximum terminal density is far from meeting a system requirement. Table 2 provides a supported maximum terminal density when the RACH attempt is 0.001667 times/second/terminal device.

**Table 2**

| Beam diameter (kilometer) | Sequence length | Supported maximum terminal density (quantity/square kilometer) |
|---|---|---|
| 20 | 839 | 9828 |
| 20 | 139 | 137558 |
| 190 | 839 | 109 |
| 190 | 139 | 1525 |

It may be learned from relationships provided in Table 1 and Table 2 that when an NR random access procedure is still used in the satellite communication system, the terminal device accesses a network in a contention manner. However, because a random access collision occurs between terminal devices that simultaneously initiate random access, a system throughput is reduced, a system access delay of the terminal devices is increased, and system performance and access experience are deteriorated.

FIG. 4 is a schematic flowchart of a communication method 200 according to an embodiment of this application. The method 200 provides a total quantity of selectable preamble sequences for different communication systems, so that when initiating random access, the terminal device may select a proper total quantity based on the system performance, to improve performance of a random access process of the communication system. As shown in FIG. 4, the method 200 includes:

S210. A terminal device #1 (that is, an example of a first communication apparatus) determines a first quantity N. The first quantity is a total quantity of to-be-generated preamble sequences, the first quantity N is one of at least two quantities, and N is a positive integer.

It should be noted that the first quantity N is a total quantity of preamble sequences generated when the terminal device #1 performs a random access process with the network device in the communication system.

Optionally, the first quantity N may be specified in a communication protocol. That the terminal device #1 determines the first quantity should be understood as that the terminal device #1 uses N specified in the communication protocol as the total quantity of to-be-generated preamble sequences.

Optionally, the first quantity N may further be indicated by the network device. For example, the terminal device #1 may receive first indication information sent by the network device. The first indication information is used for indicating the first quantity N. It should be understood that the network device may indicate the first quantity to the terminal device #1 through a system message (SIB or a master information block (master information block, MIB)), radio resource control (radio resource control, RRC) signaling, or the like. The system message or the RRC signaling may be sent in a form of broadcast or unicast. It should be further understood that the terminal device #1 receives the first indication information sent by the network device before the terminal device #1 determines the first quantity.

Optionally, the first communication device prestores a mapping table of a total quantity of preamble sequences, and the network device may send first information to the first communication device. The first information is used as an index value of the first quantity N. The terminal device #1 (an example of the first communication device) determines the total quantity N of preamble sequences based on the index value. Optionally, the mapping table of the total quantity of preamble sequences may be in a form shown in Table 3.

**Table 3**

| Index | Total quantity of preamble sequences |
|---|---|
| 0 | 64 |
| 1 | 128 |
| 2 | 256 |
| 3 | 512 |

Optionally, one piece of indication signaling of the total quantity of preamble sequences may be added to RACH configuration information of a system message SIB1. For example, PreambleNumConfig signaling is added to the RACH configuration information (RACH-ConfigGeneric), and a corresponding type of the signaling is INTEGER (0..3).

Optionally, the at least two quantities may be at least two of 32, 64, 128, 256, or 512.

Optionally, the first quantity is greater than or equal to a second quantity, and the second quantity is a total quantity of preamble sequences generated when the first communication apparatus communicates with a terrestrial network.

Optionally, the terrestrial network may be a base station in a 5G NR system, the second quantity is 64, and the first quantity may be one of 64, 128, 256, or 512.

Optionally, the first cyclic shift value is less than or equal to a second cyclic shift value. The second cyclic shift value is a cyclic shift value used for generating a preamble sequence when the first communication apparatus communicates with the terrestrial network.

Optionally, the terrestrial network may be the base station in the 5G NR system. The second cyclic shift may be one of cyclic shift values shown in Table 4. Table 4 shows a mapping relationship between a first index and the second cyclic shift value.

**Table 4**

| Index value | Second cyclic shift value | Index value | Second cyclic shift value |
|---|---|---|---|
| 0 | 0 | 8 | 46 |
| 1 | 13 | 9 | 59 |
| 2 | 15 | 10 | 76 |
| 3 | 18 | 11 | 93 |
| 4 | 22 | 12 | 119 |
| 5 | 26 | 13 | 167 |
| 6 | 32 | 14 | 279 |
| 7 | 38 | 15 | 419 |

Optionally, the first quantity is greater than or equal to the second quantity, and the first cyclic shift value is less than or equal to the second cyclic shift value.

Optionally, the first quantity N is one of 64, 128, 256, or 512.

Optionally, the first quantity is determined based on a positioning precision of a historically accessed terminal device of a network device to be accessed by the first communication apparatus.

Optionally, the network device may determine the first quantity. For example, the network device may estimate the first quantity applicable to a service area of the network device based on the positioning precision of the historically accessed terminal device. A higher positioning precision of the terminal device indicates a greater first quantity of the network device that is estimated to be reached. In another example, the network device may further estimate a load amount of the terminal device in the service area of the network device based on an access frequency of the historically accessed terminal device, and provide a corresponding first quantity. A larger load amount of the terminal device indicates a greater first quantity provided by the network device. It should be understood that a positioning precision of the terminal device may be determined based on a difference between positioning manners of the terminal device. The positioning manner of the terminal device may be global navigation satellite system (global navigation satellite system, GNSS) positioning or multi-satellite assisted positioning.

S220. The terminal device #1 generates N preamble sequences based on the first quantity N and a first cyclic shift value.

It should be noted that an implementable technical solution in which the terminal device #1 generates the preamble sequence in a random access process is generating the preamble sequence based on a ZC sequence. A specific process is as follows:
the ZC sequence is defined as:

$$x_u(n) = \exp\left[-j\frac{\pi u n(n+1)}{N_{ZC}}\right], 0 \leq n \leq N_{ZC} - 1$$

$$\text{(formula 1)}$$

$u$ is a root sequence number of the ZC sequence, and $N_{ZC}$ is a length of the ZC sequence.

Based on a property of the ZC sequence, orthogonality of a sequence generated by a ZC sequence with a single root sequence number after a cyclic shift is stronger than orthogonality of a sequence generated by a ZC sequence with a plurality of root sequence numbers after the cyclic shift. An optional solution for generating the preamble sequence is generating the preamble sequence by preferentially using the ZC sequence with the single root sequence number after the cyclic shift. It should be understood that sequences obtained by the ZC sequence with the single root sequence number after different cyclic shifts may be referred to as different preamble sequences. For example, an implementation solution of generating 64 available preamble sequences is generating the 64 available preamble sequences by the ZC sequence with the single root sequence number after the cyclic shift. In another example, when the 64 preamble sequences cannot be generated by the ZC sequence with the single root sequence number after the cyclic shift, the ZC sequence with the plurality of root sequence numbers is used for generation.

When the impact of a Doppler shift may be ignored, the ZC sequence after the cyclic shift is defined as follows:

$$x_{u,v}(n) = x_u((n + C_v) \bmod N_{ZC})$$

$$C_v = \begin{cases} vN_{CS}, & v = 0, 1, ..., \lfloor N_{ZC} / N_{CS} \rfloor - 1, N_{CS} \neq 0 \\ 0, & N_{CS} = 0 \end{cases}$$

$$\text{(formula 2)}$$

$N_{CS}$ is a cyclic shift value, representing a size of a cyclic shift step, $\lfloor \rfloor$ represents rounding down, mod represents taking a remainder, $C_v$ represents a cyclic shift amount, and n represents an $n^{th}$ symbol.

It should be understood that the first cyclic shift value is a step of the cyclic shift used by the terminal device #1 to generate the N preamble sequences by using the ZC sequence. An optional technical solution for acquiring the first cyclic shift value is determined based on a cyclic shift mapping table of a random access preamble sequence provided in a communication protocol. For example, the terminal device #1 may receive indication information #1 sent by the network device. The indication information #1 is used for indicating, to the terminal device #1, an index number corresponding to the first cyclic shift value used for generating the preamble sequence. It should be understood that the indication information #1 may be a system message SIB1. For example, the network device indicates the index number to the terminal device #1 in an RACH configuration message of the SIB1.

It should be further understood that a value of the first cyclic shift value is positively correlated with a ground cell radius, and a value of the cell radius reflects uncertainty of delay expansion and an arrival time of an asynchronous terminal on which uplink synchronization is not performed. In an optional solution, a group of cyclic shift values are obtained through division based on the cell radius, and are written into a first correspondence. The first correspondence is a mapping relationship between a plurality of index values and a plurality of second cyclic shift values. The second cyclic shift value is a cyclic shift step when a total quantity of preamble sequences is 64. A relationship between the cyclic shift value $N_{CS}$ and the cell radius r is as follows:

$$N_{CS} \geq \left\lceil \left( \frac{20}{3} r + \tau_{ds} \right) \frac{N_{ZC}}{T_{SEQ}} \right\rceil + n_g$$

(formula 3)

r is a cell radius in kilometers, $\tau_{ds}$ is maximum delay expansion in microseconds, $T_{SEQ}$ is a preamble symbol duration in microseconds, and $n_g$ is a quantity of guard samples attached by a receiver pulse shaping filter.

It should be noted that in the satellite communication system, the first communication device (the terminal device) may be equipped with a GNSS to acquire ephemeris information of a communication satellite. In this way, a terminal may acquire an accurate transmission distance from the terminal to the satellite through positioning information, thereby reducing uncertainty of an arrival time of an asynchronous terminal on which uplink synchronization is not performed. It may be understood that reduction of the uncertainty of the arrival time may cause the cyclic shift value of the ZC sequence used for generating the preamble sequence to be smaller. Therefore, when the same quantity of ZC root sequences as that of a terrestrial cell is used in the satellite communication system, the satellite communication system may generate more available preamble sequences.

For example, in the 5G NR system, when a cyclic shift value $N_{CS}$=15, a ZC sequence with two types of root sequence numbers is required to generate the 64 preamble sequences. In a scenario of the satellite communication system, based on that the terminal device may acquire the positioning precision of the terminal device, uncertainty of an uplink arrival time is small, and $N_{CS}$ = 8 may distinguish different terminals. In this case, the ZC sequence with the two types of root sequence numbers may generate 128 available preamble sequences.

For the network device, in the foregoing method for adding a preamble sequence, a quantity of used ZC root sequences is not increased, and detection complexity of the preamble sequence is hardly increased. In addition, in the manner, co-preamble interference between beams is not increased, and ZC sequence planning is not affected. Based on this, this application mainly resolves, in the scenario of the satellite communication, how to resolve, when overheads of the ZC root sequence are not increased, a problem that a collision easily occurs when the terminal device initiates random access and an access failure causes a long delay.

It should be noted that cyclic shift values in the cyclic shift mapping table specified in a protocol are classified into cyclic shift values in an unrestricted set without considering impact of the Doppler shift, and cyclic shift values in a restricted set A and B with impact of the Doppler shift considered. A terminal equipped with the GNSS is slightly affected by the Doppler shift, and only the cyclic shift values in the unrestricted set needs to be designed.

Optionally, the first cyclic shift value is determined by the network device based on the positioning precision of the historically accessed terminal device of the network device to be accessed by the first communication apparatus.

Optionally, in this embodiment of this application, the first cyclic shift value may be indicated by the network device. For example, the terminal device determines the first cyclic shift value based on a prestored cyclic shift value mapping table and an index value indicated by the network device. In another example, the terminal device may calculate the first cyclic shift value based on a first coefficient indicated by the network device and the prestored cyclic shift value mapping table.

Specifically, in this embodiment of this application, the first cyclic shift value may be determined in the following manners:

Manner 1:

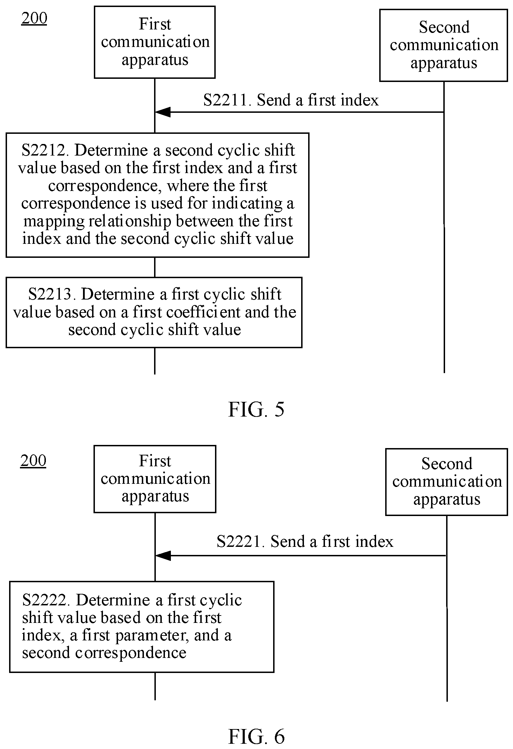

Before the terminal device generates N preamble sequences, the method 200 may further include the method for determining a cyclic shift value shown in FIG. 5. FIG. 5 shows a possible method for determining a cyclic shift value according to an embodiment of this application. The method includes the following steps.

S2211. A first communication apparatus receives a first index sent by a network device.

It should be understood that the first index is an index value corresponding to one correspondence in a first correspondence. The first correspondence is a mapping relationship between a plurality of index values and a plurality of second cyclic shift values. The second cyclic shift value is a cyclic shift step when a total quantity of preamble sequences is 64. It should be further understood that a terminal device #1 (an example of the first communication apparatus) prestores the first correspondence, and the first correspondence may be shown in Table 4.

S2212. The first communication apparatus determines the second cyclic shift value based on the first index and the first correspondence, where the first correspondence is used for indicating a mapping relationship between the first index and the second cyclic shift value.

It should be understood that the terminal device #1 determines the second cyclic shift value based on the first index and the first correspondence. The second cyclic shift value is used by the terminal device to determine a first cyclic shift value, and the first cyclic shift value matches a positioning precision of the terminal device #1.

S2213. The first apparatus determines the first cyclic shift value based on a first coefficient and the second cyclic shift value.

The first coefficient is used for indicating a ratio of a cyclic shift value used in a first positioning precision to a cyclic shift value used in a second positioning precision. The first positioning precision is a current positioning precision of the first communication apparatus, and the second cyclic shift value is a cyclic shift value used in the second positioning precision.

It should be understood that the first positioning precision is the current positioning precision of the first communication apparatus. For example, when the terminal device #1 is to access a satellite communication system, the current positioning precision of the terminal device #1 is a positioning precision obtained when the terminal device #1 accesses the satellite communication system. It should be further understood that the second cyclic shift value is a cyclic shift value used in the second positioning precision or a terrestrial network. For example, the terrestrial network may be a 5G NR system, and the cyclic shift value used in the terrestrial network may be determined based on a cell radius of a cellular network.

It should be noted that in the satellite communication system, a positioning precision of the system (that is, uncertainty of an arrival time of an asynchronous terminal device that does not complete uplink synchronization) is jointly determined by the positioning precision of the terminal device and a positioning precision of a satellite.

Optionally, the terminal device #1 may receive the first coefficient indicated by the network device. For example, the network device may indicate the first coefficient through a system message, or the like. In another example, a third mapping table may be designed in advance in the terminal device #1 and the network device. The third mapping table represents a mapping relationship between an index and a coefficient. The coefficient is used for determining a current cyclic shift value of the terminal device and a total quantity of to-be-generated preamble sequences. The network device may indicate the index value to the terminal device #1 through the system message, and the terminal device #1 determines the coefficient based on the index value. Table 5 shows a mapping relationship between an index value and a coefficient, for example, a coefficient mapping table shown in Table 5.

**Table 5**

| Index value | Coefficient |
|---|---|
| 0 | 1 |
| 1 | 1/2 |
| 2 | 1/4 |
| 3 | 1/8 |

Specifically, a piece of signaling used for indicating the coefficient may be added to RACH configuration information of the system message SIB 1. For example, zeroCorrelationZoneDivideConfig signaling is added to the RACH configuration information (RACH-ConfigGeneric), and a corresponding type of the signaling is INTEGER (0..3).

Optionally, the first coefficient may be specified in a communication protocol.

That the first cyclic shift value is determined based on the second cyclic shift value $N_{CS2}$ determined in step S2212 and the first coefficient a may be that the terminal device #1 determines the first cyclic shift value $N_{CS1}$ based on the following relation:

$$N_{CS1=} N_{CS2} \times \text{a first coefficient a}$$

Optionally, the terminal device #1 may further determine the first cyclic shift value based on the following relation:

$$N_{CS1=} N_{CS2} / \text{a first coefficient } a'$$

It should be noted that a and $a'$ are reciprocals of each other. When the terminal device #1 calculates the first cyclic shift value in a form of $N_{GS1} = N_{CS2}$ /a first coefficient $a'$, correspondingly, the coefficient in the third mapping table is a reciprocal of the coefficient shown in Table 5.

Random access is performed in the manner. The network device may indicate an index number of the cyclic shift value in a manner the same as that in a 5G NR. The terminal device #1 may acquire both the cyclic shift value used in the satellite communication system and a total quantity of available preamble sequences based on indication signaling of the first coefficient. In the method, only one piece of signaling is used for acquiring two indication parameters, thereby reducing signaling overheads, and a configuration method is flexible to some extent. It should be understood that the foregoing examples are merely examples for description, and do not constitute a limit to this embodiment of this application. For example, the method may be further applied to a communication system in another scenario.

Manner 2:

Before the terminal device generates N preamble sequences, the method 200 may further include the method for determining a cyclic shift value shown in FIG. 6. FIG. 6 shows a possible method for determining a cyclic shift value according to an embodiment of this application. The method 200 includes the following steps.

S2221. A first communication apparatus receives a first index sent by a network device.

It should be understood that the first index is an index value corresponding to one correspondence in a second correspondence. It should be further understood that the terminal device #1 (an example of the first communication apparatus) prestores the second correspondence.

S2222. The first communication apparatus determines the first cyclic shift value based on the first index, a first parameter, and the second correspondence.

The second correspondence is used for indicating a mapping relationship between the first index and a first cyclic shift value group, the first cyclic shift value group includes at least two cyclic shift values, the first parameter is used for determining the first cyclic shift value from the at least two cyclic shift values, and the first parameter is used for indicating a positioning precision currently used by the first communication apparatus or a currently to-be-accessed system.

It should be understood that the cyclic shift value group includes different cyclic shift values. The different cyclic shift values correspond to different parameters. The terminal device #1 (that is, an example of the first communication apparatus) determines the first cyclic shift value based on the received first index value and the first parameter.

Optionally, each mapping table records cyclic shift values respectively used in a plurality of types of positioning precisions.

Optionally, the cyclic shift value group may include two cyclic shift values, and the two cyclic shift values correspond to two types of different positioning precisions. When the first communication apparatus is in the satellite communication system, the first parameter is a positioning precision of the satellite communication system, and each mapping table records cyclic shift values respectively used in the two types of positioning precisions.

Optionally, each mapping table records cyclic shift values respectively used in a plurality of access systems. Specifically, Table 6 shows a possible case in which the cyclic shift value group includes two cyclic shift values.

Table 6 describes a preamble sequence whose length is 839 and whose subcarrier spacing is 1.25 kHz corresponding to an NTN system.

Specifically, the terminal device #1 determines the first cyclic shift value as 13 based on the received second correspondence (for example, Table 6) of the first index value (for example, the index 5) and the first parameter (whose access system is the NTN system).

It should be understood that the foregoing is merely a schematic example, and does not constitute a limit to this embodiment of this application. For example, $N_{CS}$ values corresponding to different indexes in the NTN system in Table 6 may have different values.

**Table 6**

| Index | $N_{CS}$ value | |
| --- | --- | --- |
| | NR system | NTN system |
| 0 | 0 | 0 |
| 1 | 13 | 6 |
| 2 | 15 | 8 |
| 3 | 18 | 9 |
| 4 | 22 | 11 |
| 5 | 26 | 13 |

(continued)

| Index | $N_{CS}$ value | |
| --- | --- | --- |
| | NR system | NTN system |
| 6 | 32 | 16 |
| 7 | 38 | 19 |
| 8 | 46 | 23 |
| 9 | 59 | 29 |
| 10 | 76 | 38 |
| 11 | 93 | 46 |
| 12 | 119 | 59 |
| 13 | 167 | 83 |
| 14 | 279 | 139 |
| 15 | 419 | 209 |

Manner 3:

A terminal device #1 determines a first cyclic shift value based on a fourth correspondence and an index value indicated by a network device.

The fourth correspondence is a correspondence between a first index and the first cyclic shift value. A value of the first cyclic shift value in the fourth correspondence may be determined based on a second cyclic shift value. The first cyclic shift value is less than or equal to the second cyclic shift value. The first cyclic shift value corresponds to a first system, and the second cyclic shift value corresponds to a second system. It should be understood that the first system may be a satellite communication system or an NTN system, and the second system is a 5G NR system. It should be further understood that a total quantity of preamble sequences corresponding to the second system is 64.

It should be noted that a design manner of the fourth correspondence may be reducing, by proportion, an unrestricted cyclic shift value specified in the second system, and increasing, by a corresponding proportion, a total quantity of preamble sequences.

Specifically, the first cyclic shift value in the fourth correspondence may be designed based on the following formula:

$$N_{CS1} = \lfloor N_{CS2} / M \rfloor$$

M is an integer greater than 1, $N_{CS1}$ is a first cyclic shift value, $N_{CS2}$ is a second cyclic shift value, and $\lfloor \ \rfloor$ represents rounding down.

The fourth correspondence may be shown in Table 5.

In Table 6, when an index value is 0, a first cyclic shift value corresponding to the NTN system should be seldom used in practice because a positioning precision is too loose. When the index value is 2, the first index value is a minimum valid cyclic shift value $N_{CS}$=8. In this case, it should be noted that when the index value is 2, the cyclic shift value obtained based on the foregoing design manner is an invalid cyclic shift value. To enable more valid cyclic shift values to exist in the mapping table, when $N_{CS}$=8 does not exist in the mapping table obtained based on the foregoing design manner, the cyclic shift value corresponding to the index value 2 is set to 8. It should be understood that a value of the minimum valid cyclic shift value may be obtained through calculation based on a relationship between the cyclic shift value and a cell radius.

It should be noted that in the correspondence shown in Table 6, it may be specified that a total quantity of preamble sequences is expanded from the original 64 to 128. In this case, a preamble sequence index RAPID indicated by RAR is expanded from the original 6 bits to 7 bits. More generally, if a maximum value $N_{max} \leq 64 \times 2^m$ of the total quantity of available preamble sequences is specified, and m is a minimum positive integer meeting an inequality, the preamble sequence index RAPID should be expanded from 6 bits to (6+m) bits.

Optionally, M is one of 2, 4, or 8, and correspondingly, the total quantity of available preamble sequences in the NTN system is 128, 256, or 512.

When the terminal device #1 prestores the fourth correspondence, the terminal device #1 determines, from frequency sweep information or a system message (an SIB or an MIB), that the satellite communication system (or the NTN system) is accessed, receives zeroCorrelationZoneConfig signaling (which is used for indicating the first index) from an RACH configuration message of the SIB 1, and further determines the first cyclic shift value based on the fourth correspondence.

Table 7 shows specific relationships between $N_{CS2}$ and $N_{CS1}$ a cell radius, a positioning precision, a quantity n of preamble sequences that may be generated by a ZC sequence with a single root sequence number, and a quantity of used ZC root sequences. It may be learned from Table 7 that when the cyclic shift value is reduced, a corresponding quantity of preamble sequences that may be generated by the ZC sequence with the single root sequence number is increased. Based on this, a total quantity of available preamble sequences may be increased when a quantity of ZC root sequences is not increased.

**Table 7**

| Index | $N_{CS2}$ | Cell radius (km) | Quantity n of preamble sequences | Quantity of used ZC root sequences | $N_{CS1}$ | Positioning precision (km) | Quantity n of preamble sequences | Quantity of used ZC root sequences |
|---|---|---|---|---|---|---|---|---|
| 0 | 0 | 118.93 | 1 | 64 | 0 | 118.93 | 1 | 128 |
| 1 | 13 | 0.79 | 64 | 1 | 6 | N/A | 139 | N/A |
| 2 | 15 | 1.07 | 55 | 2 | 8 | 0.07 | 104 | 2 |
| 3 | 18 | 1.50 | 46 | 2 | 9 | 0.22 | 93 | 2 |
| 4 | 22 | 2.08 | 38 | 2 | 11 | 0.50 | 76 | 2 |
| 5 | 26 | 2.65 | 32 | 2 | 13 | 0.79 | 64 | 2 |
| 6 | 32 | 3.51 | 26 | 3 | 16 | 1.22 | 52 | 3 |
| 7 | 38 | 4.36 | 22 | 3 | 19 | 1.65 | 44 | 3 |
| 8 | 46 | 5.51 | 18 | 4 | 23 | 2.22 | 36 | 4 |
| 9 | 59 | 7.37 | 14 | 5 | 29 | 3.08 | 28 | 5 |
| 10 | 76 | 9.80 | 11 | 6 | 38 | 4.36 | 22 | 6 |
| 11 | 93 | 12.23 | 9 | 8 | 46 | 5.51 | 18 | 8 |
| 12 | 119 | 15.95 | 7 | 10 | 59 | 7.37 | 14 | 10 |
| 13 | 167 | 22.81 | 5 | 13 | 83 | 10.8 | 10 | 13 |
| 14 | 279 | 38.83 | 3 | 22 | 139 | 18.81 | 6 | 22 |
| 15 | 419 | 58.86 | 2 | 32 | 209 | 28.82 | 4 | 32 |

In Table 7, $N_{CS1}$ may correspondingly cover a positioning precision from 0.07 km to 28.82 km in the satellite communication system. Generally, considering factors such as an ephemeris source, a satellite orbit height, a satellite shape, and an ephemeris prediction duration, an ephemeris precision is generally between a meter level and a hundred-meter level. A positioning precision of a GNSS terminal is at a meter level in an open area, and is at a hundred-meter level in a dense urban area. Generally, a positioning precision of a multi-satellite positioning terminal is at a kilometer level. $N_{CS1}$ designed in Table 7 may better meet requirements of ephemeris and terminals in different precisions.

It should be understood that the foregoing is merely an example, and does not constitute a limit to this embodiment of this application. For example, a cyclic shift value in the mapping table may be less than or equal to $N_{CS2}$ of a same index.

Manner 4:

It should be noted that in Manner 4, a step of determining the first cyclic shift value by the terminal device #1 based on a fifth correspondence is similar to that in Manner 3. To avoid repetition, a detailed process thereof is omitted, and only a design process of a mapping table corresponding to the fifth correspondence is described herein.

Optionally, a possible form of a cyclic shift mapping table (the fifth correspondence) may be shown in Table 8.

**Table 8**

| Index | $N_{CS}$ value | Index | $N_{CS}$ value |
|---|---|---|---|
| 0 | 0 | 8 | 26 |
| 1 | 6 | 9 | 32 |
| 2 | 8 | 10 | 38 |
| 3 | 9 | 11 | 52 |
| 4 | 11 | 12 | 64 |
| 5 | 13 | 13 | 83 |
| 6 | 16 | 14 | 139 |
| 7 | 19 | 15 | 209 |

Table 9 shows specific relationships between $N_{CS2}$ and $N_{CS1}$ and a cell radius, a positioning precision, a quantity n of preamble sequences that may be generated by a ZC sequence with a single root sequence number, and a quantity of used ZC root sequences in the fifth correspondence. It may be learned from Table 9 that when the cyclic shift value is reduced, a corresponding quantity of preamble sequences that may be generated by the ZC sequence with the single root sequence number is increased. Based on this, a total quantity of available preamble sequences may be increased when a quantity of ZC root sequences is not increased.

**Table 9**

| Index | $N_{CS2}$ | Cell radius (km) | Quantity n of preamble sequences | Quantity of used ZC root sequences | $N_{CS1}$ | Positioning precision (km) | Quantity n of preamble sequences | Quantity of used ZC root sequences |
|---|---|---|---|---|---|---|---|---|
| 0 | 0 | 118.93 | 1 | 64 | 0 | 118.93 | 1 | 128 |
| 1 | 13 | 0.79 | 64 | 1 | 6 | N/A | 139 | 1 |
| 2 | 15 | 1.07 | 55 | 2 | 8 | 0.07 | 104 | 2 |
| 3 | 18 | 1.50 | 46 | 2 | 9 | 0.22 | 93 | 2 |
| 4 | 22 | 2.08 | 38 | 2 | 11 | 0.50 | 76 | 2 |
| 5 | 26 | 2.65 | 32 | 2 | 13 | 0.79 | 64 | 2 |
| 6 | 32 | 3.51 | 26 | 3 | 16 | 1.22 | 52 | 3 |
| 7 | 38 | 4.36 | 22 | 3 | 19 | 1.65 | 44 | 3 |
| 8 | 46 | 5.51 | 18 | 4 | 26 | 2.65 | 32 | 4 |
| 9 | 59 | 7.37 | 14 | 5 | 32 | 3.51 | 26 | 5 |
| 10 | 76 | 9.80 | 11 | 6 | 38 | 4.36 | 22 | 6 |
| 11 | 93 | 12.23 | 9 | 8 | 52 | 6.37 | 16 | 8 |
| 12 | 119 | 15.95 | 7 | 10 | 64 | 8.08 | 13 | 10 |
| 13 | 167 | 22.81 | 5 | 13 | 83 | 10.8 | 10 | 13 |
| 14 | 279 | 38.83 | 3 | 22 | 139 | 18.81 | 6 | 22 |
| 15 | 419 | 58.86 | 2 | 32 | 209 | 28.82 | 4 | 32 |

In the fifth correspondence, under a same index value, a quantity of used ZC root sequences corresponding to the first cyclic shift value $N_{CS1}$ and the second cyclic shift value $N_{CS2}$ may remain unchanged, a total quantity of available preamble sequences in the satellite communication system is agreed on, and a maximum value in the fifth correspondence $N_{CS1}$ is calculated based on $N_{CS2}$ corresponding to each index. For example, a process of designing the fifth correspondence may be: determining, based on $N_{CS2}$ and a length of a ZC sequence, a quantity n of preamble sequences that may be generated by each sequence, determining a required quantity of ZC sequences based on the quantity n of preamble sequences that may be generated by each ZC sequence and a total quantity 64 of to-be-generated preamble sequences, determining, based on the total quantity (that is, the first quantity N) of to-be-generated preamble sequences and a quantity of ZC root sequences when detection complexity of the network device is not increased, the quantity n of preamble sequences that may be generated by each ZC sequence, and determining a cyclic shift value based on the quantity of preamble sequences and the length of the ZC sequence.

Optionally, when quantities of ZC root sequences correspondingly used for several consecutive index values are the same, $N_{CS1}$ may increase step by step in a form of an arithmetic sequence.

It should be understood that in Table 8, when the index value is 0, a first cyclic shift value corresponding to an NTN system should be seldom used in practice because a positioning precision is too loose. When the index value is 2, a first index value is a minimum valid cyclic shift value $N_{CS}=8$ and the value is not repeated. In this way, more valid cyclic shift values may exist in the mapping table.

In Manner 4, a total quantity of available preamble sequences may be increased when a quantity of used ZC root sequences is not increased. In addition, $N_{CS1}$ corresponding to each index in the mapping table designed in the manner is greater than or equal to a cyclic shift value in Manner 3, and a positioning precision range of each $N_{CS1}$ is properly expanded. Therefore, the network device may select and indicate a small cyclic shift value, and reduce the quantity of used ZC root sequences.

Manner 5:

A terminal device #1 determines a first cyclic shift value based on a sixth correspondence and an index value indicated by a network device.

It should be noted that the sixth correspondence is a mapping relationship between the index value and the cyclic shift value, and the sixth correspondence may be preconfigured in a communication system.

In the sixth correspondence, the first cyclic shift value corresponding to each index value is less than or equal to a second cyclic shift value corresponding to the index value. It should be understood that the mapping relationship between the second cyclic shift value and the index value may be shown in Table 4. Specifically, a method for designing the first cyclic shift value in the sixth correspondence may be the methods shown in Manner 3 and Manner 4. To avoid repetition, detailed descriptions thereof are omitted herein. It should be further understood that the foregoing is merely an example, and does not constitute a limit to this embodiment of this application.

In Manner 5, the cyclic shift value is acquired by searching a communication system-specific mapping table through an index number indicating the cyclic shift value, and the total quantity of available preamble sequences is acquired based on indication signaling. The cyclic shift indication method has good compatibility, and the network device may flexibly configure the total quantity of available preamble sequences based on an actual scenario requirement.

S230. The terminal device #1 sends a first preamble sequence. The first preamble sequence is one of N preamble sequences, and the first preamble sequence is used for performing random access.

It should be understood that the terminal device #1 generates the N preamble sequences based on the total quantity N of preamble sequences and the first cyclic shift value, and randomly selects one preamble sequence to perform random access.

Optionally, in the method shown in FIG. 5, when the terminal device #1 determines the first cyclic shift value by using a first coefficient a, correspondingly, the terminal device #1 may determine the total quantity N of preamble sequences through the following relation:

$$\text{A total quantity N of preamble sequences} = 64/\text{a first coefficient } a$$

Optionally, in the method shown in FIG. 5, when the terminal device #1 determines the first cyclic shift value by using the first coefficient a', correspondingly, the terminal device #1 may determine the total quantity N of preamble sequences through the following relation:

$$\text{A total quantity N of preamble sequences} = 64 \times \text{a first coefficient } a'$$

It should be further understood that the performing, by the first communication apparatus, random access by using one of the N preamble sequences includes: performing, by the first communication apparatus, random access on a first time domain resource by using one of the N preamble sequences. It should be further understood that the first time domain resource is allocated by the network device. For example, the network device may indicate an allocation status of a PRACH time domain resource through a system message (SIB) or RRC signaling.

Optionally, a first time-frequency resource corresponds to the first cyclic shift value.

Optionally, the first time-frequency resource corresponds to a current positioning precision of the first communication apparatus.

Optionally, the first time-frequency resource corresponds to a system to be accessed by the first communication apparatus.

Optionally, the first time-frequency resource corresponds to a first quantity.

It should be noted that the terminal device #1 initiates random access by using the first preamble sequence. Correspondingly, the network device detects the first preamble sequence based on the first quantity N and the first cyclic shift value, and performs a random access process with the terminal device. Optionally, the random access process may be shown in the method 100.

It should be further understood that in a possible implementation form of the communication method 200 shown in FIG. 4, before the generating, by the first communication apparatus, the N preamble sequences based on the first quantity N and the first cyclic shift value, the method 200 further includes:

S231. The first communication apparatus determines that the first cyclic shift value meets a requirement of the current positioning precision of the first communication apparatus on a cyclic shift value.

It should be noted that in a satellite communication system, the positioning precision is jointly determined by a positioning precision of the terminal device and a positioning precision of a satellite. The positioning precision includes an ephemeris precision, a terminal positioning precision, or the like. Therefore, the network device cannot directly determine a total positioning precision. In a case of the satellite communication system, the cyclic shift value is related to the positioning precision. The terminal device may determine whether the cyclic shift value meets a precision condition of the terminal device based on the cyclic shift value indicated by the network device and the positioning precision of the terminal device, and acquire the cyclic shift value that meets the precision condition of the terminal device based on a determining result to perform random access.

It should be understood that when determining that the first cyclic shift value indicated by the network device meets a condition of the terminal device #1, the terminal device #1 performs random access by using the cyclic shift value indicated by the network device. When the first cyclic shift value does not meet a precision of the terminal device #1, the terminal device #1 may acquire, in a form of scaling the first cyclic shift value and the total quantity of preamble sequences, the cyclic shift value that meets a precision requirement and the total quantity of preamble sequences, to complete random access.

It should be further understood that the terminal device #1 may determine whether the first cyclic shift value meets the positioning precision of the terminal device #1 based on a form shown in the formula 3. Specifically, the terminal device may learn of the positioning precision of the terminal device. The terminal device may estimate the positioning precision corresponding to the first cyclic shift value based on the formula 3 and the first cyclic shift value, and perform determining based on a relationship between the positioning precision corresponding to the first cyclic shift value and the positioning precision of the terminal device.

It should be noted that the foregoing examples are merely examples for description, and do not constitute a limit to this embodiment of this application. For example, an execution entity of this embodiment of this application may alternatively be a chip or a chip system having a communication function.

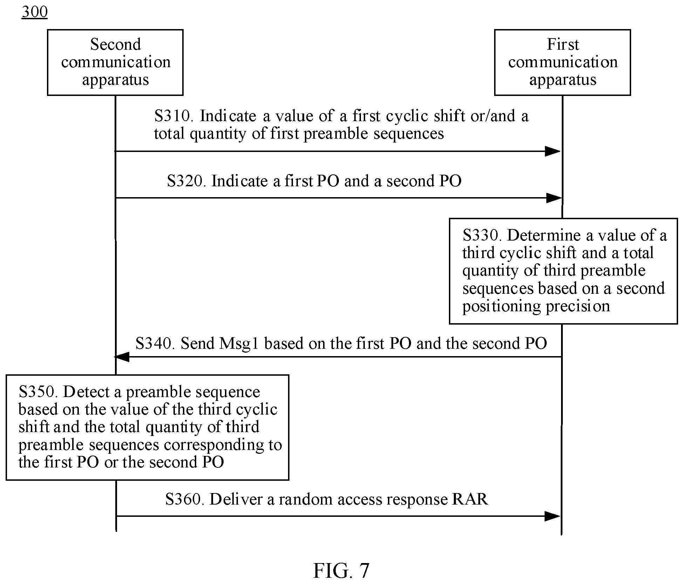

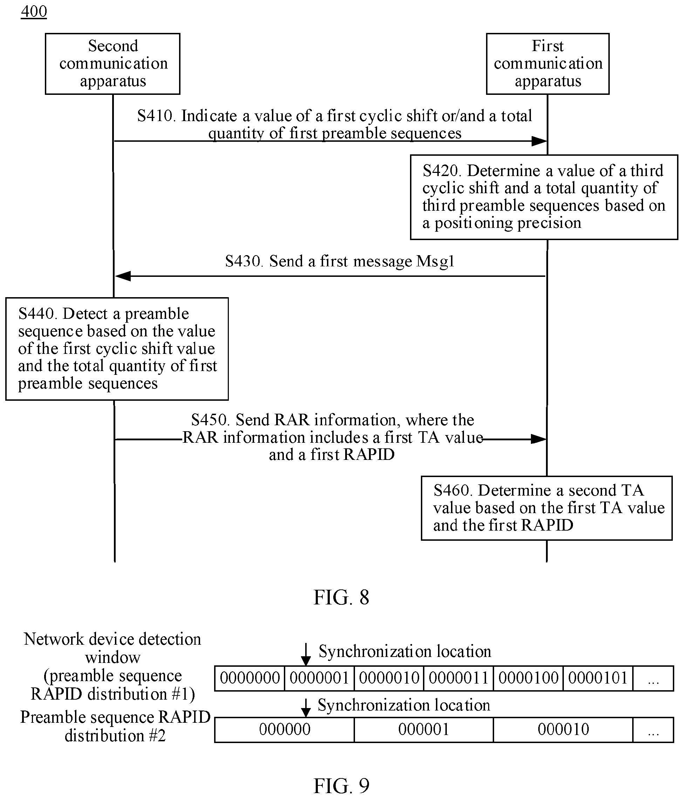

FIG. 7 and FIG. 8 show a method for performing random access by the terminal device when the first cyclic shift value does not meet a positioning precision requirement of the terminal device. According to the method shown in FIG. 7 or FIG. 8, a problem that in a satellite communication scenario, when terminal devices in different positioning precisions initiate random access, a collision easily occurs, and an access failure causes a long delay may be effectively resolved.

FIG. 7 is a schematic flowchart of a possible communication method 300 according to an embodiment of this application. The foregoing method may alternatively be used in a procedure in which the network device performs preliminary indication and the terminal device assists in determining shown in the method 300 in FIG. 7.

It should be understood that the method 300 may include a step of determining the total quantity of preamble sequences and the cyclic shift value that are provided in the method 200. To avoid repetition, detailed descriptions thereof are omitted herein.

FIG. 7 is a schematic interaction diagram of a random access method 300 according to an embodiment of this application. The method 300 shown in FIG. 7 may be applied to the system shown in FIG. 1. The method 300 includes the following steps.

S310. A network device indicates a first cyclic shift value $N_{CS}$ and/or a total quantity of first preamble sequences to a terminal device (that is, a first communication apparatus).

Optionally, the network device and the terminal device may agree on the total quantity of first preamble sequences.

Optionally, the network device configures the total quantity of preamble sequences for the terminal device in a signaling indication manner.

As an example instead of a limitation, in this embodiment of this application, the total quantity of preamble sequences and the cyclic shift value in the method 300 may be provided in the manner shown in FIG. 7. To avoid repetition, detailed descriptions thereof are omitted herein.

Optionally, the network device determines the first cyclic shift value based on a first positioning precision. The first positioning precision is a positioning precision indicated by the network device. It should be understood that the network device may determine the first positioning precision based on a first factor and a reachable precision of the terminal device equipped with a GNSS in a coverage area. The first factor may be a system ephemeris precision and a service area feature. This application is not limited thereto. The reachable precision is a positioning precision (that is, a second positioning precision) of the terminal device.

For example, the network device determines that the system ephemeris precision is 100 meters, most GNSS terminal devices in the current coverage area have a positioning error of about 200 meters, and the network device and the terminal device as a whole have a positioning error of 300 meters. The network device determines that a first $N_{CS}$ value that needs to be indicated to a terminal is not less than 10 based on a relation (that is, the formula 3) between the cyclic shift value and the positioning precision. For example, an indicated first $N_{CS}$ is 10. Specifically, the network device calculates a value of the cyclic shift value corresponding to the positioning error based on the formula 3 and the positioning error of 300 meters.

Optionally, the network device 110 may send the first cyclic shift value and/or a quantity of first preamble sequences to the terminal device in a form of broadcast or unicast.

Optionally, the network device may indicate the first $N_{CS}$ and/or the quantity of first preamble sequences to the terminal device through RRC signaling or a system message SIB.

S320. The network device indicates a first PO and a second PO to the terminal device.

It should be understood that a time domain resource PO of a physical random access channel is allocated by the network device. The time domain resource PO of the PRACH includes the first PO and the second PO. The first PO corresponds to a first terminal device, and the second PO corresponds to a second terminal device. The first terminal device is a terminal device in a high positioning precision in a satellite service area, and the second terminal device is a terminal device in a low positioning precision in the satellite service area.

Optionally, the network device may allocate the PO based on the positioning precision of the terminal device in the coverage area. For example, the network device knows positioning precisions of most terminal devices and a positioning precision of a lowest-end terminal device. It is assumed that a cyclic shift value indicated by the network device in a scenario is $N_{CS}=10$, a total quantity of available preamble sequences is 128, and the lowest-end terminal device corresponds to $N_{CS}=20$. The network device allocates and indicates the first PO (for example, occupying 80% of the PO) as a PO 0 corresponding to $N_{CS}=10$, and the second PO (for example, occupying 20% of the PO) as a PO 1 corresponding to $N_{CS}=20$. The foregoing examples are merely examples for description, and this application is not limited thereto.

Optionally, the network device may indicate a PO grouping status to the terminal device through RRC signaling or a system message SIB. The PO grouping status represents the first PO and the second PO.

S330. The terminal device determines a third cyclic shift value and a total quantity of third preamble sequences based on a second positioning precision.

It should be understood that the second positioning precision is determined by the terminal device based on a difference between positioning manners of the terminal device, and the positioning manners of the terminal device may include a global navigation positioning system GNSS positioning manner and a multi-satellite assisted positioning manner.

Optionally, the terminal device determines whether the first $N_{CS}$ meets a precision requirement of the terminal device based on the second positioning precision.

Optionally, when determining that the first $N_{CS}$ meets the precision requirement, the terminal device performs random access by using the first $N_{CS}$. It should be understood that when the first cyclic shift value meets the precision requirement of the terminal device, execution steps of the first cyclic shift value may be similar to those in the method 200. To avoid repetition, detailed descriptions thereof are omitted herein.

It should be further understood that when the terminal device determines that the first $N_{CS}$ meets the precision requirement, the performing random access by using the first $N_{CS}$ may be: determining the first $N_{CS}$ as a third $N_{CS}$, and determining a total quantity of first preamble sequences as a total quantity of third preamble sequences. It should be understood that determining, by the terminal device, the first $N_{CS}$ as the third $N_{CS}$ may be re-determining a third $N_{CS}$. A value of the third $N_{CS}$ is the same as a value of the first $N_{CS}$. An understanding manner of determining the total quantity of first preamble sequences as the total quantity of third preamble sequences may be the same as that of determining the first $N_{CS}$ as the third $N_{CS}$. To avoid repetition, detailed descriptions thereof are omitted herein.

Optionally, when determining that the first cyclic shift value does not meet the precision requirement, the terminal device generates the third $N_{CS}$ based on the first $N_{CS}$, and uses the third $N_{CS}$ as the cyclic shift value used by the terminal device to generate a preamble sequence.

Optionally, that the terminal device generates the third $N_{CS}$ based on the first $N_{CS}$ may be that the terminal device increases a value of the first $N_{CS}$ to $m$ times of the original first $N_{CS}$. It should be understood that the value of the first $N_{CS}$ is increased to $m$ times of the original first $N_{CS}$, and a total quantity of third preamble sequences corresponding to the terminal device may be reduced to $m$ times of the total quantity of first preamble sequences. The terminal device correspondingly reduces the total quantity of available preamble sequences, so that preamble sequence replanning may be avoided and inter-beam co-preamble interference may be avoided.

In a possible implementation, a value of $m$ is 2.

For example, in a service area of the network device, a positioning error of the terminal device #1 (an example of the first terminal device) is 200 meters, and a positioning error of the terminal device #2 (an example of the second terminal device) is 1 kilometer. A value of the first $N_{CS}$ of an indication sent by the network device is 10. It may be understood that a detection peak value of a preamble sequence sent by the terminal device #2 may exceed a detection window in which $N_{CS}=10$ and that is indicated by a network side. The terminal device #2 uses a preamble sequence corresponding to a cyclic shift value (that is, the third $N_{CS}$) of 20, and changes the total quantity of available preamble sequences to 1/2 of an original quantity. It should be further understood that in this case, a value of the third $N_{CS}$ may be calculated by the terminal device #2 based on a positioning error.

S340. The terminal device sends a first message Msg1 to the network device based on the first PO or the second PO. Correspondingly, the network device receives the Msg1 sent by the terminal device.

The first message is a third preamble sequence, and the third preamble sequence is determined by the terminal device based on the third $N_{CS}$ and a total quantity of third preamble sequences. Specifically, the terminal device may acquire an available PRACH time domain resource and a preamble sequence set based on the third $N_{CS}$ and a total quantity of third preamble sequences. When initiating random access, the terminal device randomly selects, from the set, an access resource used for sending the Msg1. Optionally, the terminal device may further generate the preamble sequence set based on the third $N_{CS}$ and the total quantity of third preamble sequences.

Optionally, when determining that the first cyclic shift value meets the precision requirement (that is, the terminal device is the first terminal device), the terminal device generates a preamble sequence corresponding to the first $N_{CS}$ based on the third $N_{CS}$, and the terminal device randomly selects a PO #0 (an example of the first PO) and a preamble sequence #0 (an example of the preamble sequence corresponding to the first $N_{CS}$) for access.

Optionally, when determining that the first cyclic shift value does not meet the precision requirement (that is, the terminal device is the second terminal device), the terminal device generates the third preamble sequence based on the third $N_{CS}$, and the terminal device randomly selects a PO #1 (an example of the second PO) and a preamble sequence #1 (an example of the third preamble sequence) for access.

S350. Detect the third preamble sequence based on a second $N_{CS}$ value corresponding to the first PO or the second PO and the total quantity of third preamble sequences.

It should be understood that the network device may detect the preamble sequence based on the third $N_{CS}$ value corresponding to the first PO or the second PO and the total quantity of third preamble sequences, acquire a preamble sequence index RAPID and a downlink sending beam, and estimate a transmission delay of the terminal device corresponding to the first PO or the second PO.

S360. The network device sends a random access response RAR.

Optionally, the RAR includes a timing advance TA value and the preamble sequence index RAPID.

After receiving the RAR, the terminal device completes a random access procedure based on an RAR message. It should be understood that the terminal device may perform a method similar to that in the conventional technology herein. To avoid repetition, detailed descriptions thereof are omitted.

It should further be understood that FIG. 7 shows steps or operations of an information processing method, but these steps or operations are merely examples. Another operation or a variation of each operation in FIG. 7 may alternatively be performed in this embodiment of this application.

FIG. 8 is a schematic interaction diagram of another possible random access method 400 according to an embodiment of this application. The method 400 shown in FIG. 8 may be applied to the system shown in FIG. 1. The method 400 includes the following steps.

S410. A network device indicates a value $N_{CS}$ of a first cyclic shift value and/or a total quantity of first preamble sequences to a terminal device (that is, a first communication apparatus).

S420. The terminal device determines a third cyclic shift value and a total quantity of third preamble sequences based on a second positioning precision.

It should be understood that in this case, steps S410 and S420 performed in the method 400 may be the same as steps S320 and S330 in the method 300. To avoid repetition, detailed descriptions thereof are omitted herein.

S430. The terminal device sends a first message Msg1 to the network device.

The first message is a third preamble sequence, and the third preamble sequence is determined by the terminal device based on the third $N_{CS}$ and a total quantity of third preamble sequences. Specifically, the terminal device may acquire an available PRACH time domain resource and a preamble sequence set based on the third $N_{CS}$ and a total quantity of third preamble sequences. When initiating random access, the terminal device randomly selects, from the set, an access resource used for sending the Msg1. Optionally, the terminal device may further generate the preamble sequence set based on the third $N_{CS}$ and the total quantity of third preamble sequences.

S440. The network device detects a preamble sequence based on the value of the first cyclic shift value and the total quantity of first preamble sequences.

It should be understood that the value of the first cyclic shift value and the total quantity of first preamble sequences are configured by the network device, and a positioning precision of the terminal device is not distinguished when the network device detects the preamble sequence.

S450. The network device sends a random access response RAR message to the terminal device, where the RAR message includes a first TA value and a first RAPID.

It should be understood that the first TA value is a transmission delay that is of the terminal device and that is estimated by the network device.

S460. The terminal device determines a second TA value based on the first TA value and the first RAPID.

It should be understood that the terminal device may determine the second TA based on a positioning precision of the terminal device.

Optionally, the terminal device may acquire all bits of the first RAPID in the RAR message and compare all bits of the first RAPID in the RAR message with a third RAPID, and acquire the first TA value in the RAR message as the second TA based on a comparison result. The third RAPID is an index of a third preamble sequence sent by the terminal device to the network device.

Optionally, the terminal device may further acquire all bits of the first RAPID in the RAR message, compare the selected preamble sequence index with bits corresponding to the first RAPID, and calculate the second TA based on a comparison result.

For example, when a high-precision terminal uses $N_{cs}$ and 128 preamble sequences, and a low-precision terminal uses 2 $N_{cs}$ and 64 preamble sequences, the terminal device acquires all bits of the first RAPID in the RAR message, and compares the six most significant bits with the selected preamble sequence index.

When the six most significant bits are the same as the selected preamble sequence index, the second TA is determined through the following relation:

$$\text{a second TA} = \text{a first TA} + \text{a first } N_{CS} \times \text{a value of the least significant bit of the first RAPID}$$

Specifically, FIG. 9 is a schematic diagram of a preamble sequence index of a terminal device and a synchronization location according to an embodiment of this application. As shown in FIG. 9, generally, preamble sequence RAPID distribution (that is, preamble sequence RAPID distribution #1) of the terminal device is the same as a detection window on a network side. These terminals may compare all bits of a preamble sequence index RAPID of the RAR with a selected preamble sequence index, and directly acquire a TA value. A window length (that is, preamble sequence RAPID distribution #2) of a low-end terminal preamble sequence is twice the detection window on the network side, and the preamble sequence index RAPID is correspondingly reduced by 1 bit. These terminals compare the six most significant bits of the preamble sequence index RAPID of the RAR with the preamble sequence index, and calculate an actual TA value through a relation.

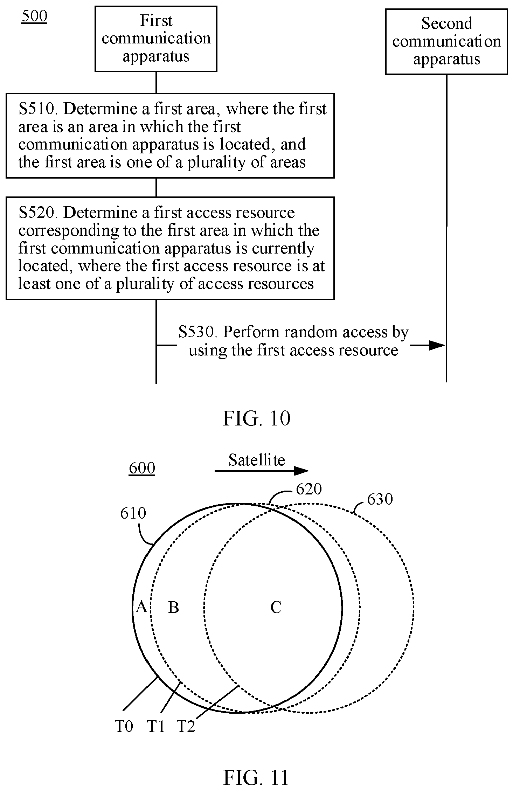

A satellite in an asynchronous satellite system moves around the earth at a high speed, and the terminal device (that is, the first communication apparatus) frequently switches between different satellite beams. If the terminal undergoes satellite beam switching before completing a contention-based random access process, an access request is lost, thereby prolonging an access time. FIG. 10 is a schematic interaction diagram of still another communication method according to an embodiment of this application. The method 500 shown in FIG. 10 may resolve an access request loss caused by beam switching, and increase an average access time of the terminal device in a satellite service area. The method 500 includes the following steps.

S510. A first communication apparatus determines a first area, where the first area is an area in which the first communication apparatus is located, and the first area is one of a plurality of areas.

It should be understood that the plurality of areas may be areas with different random access time restrictions in a coverage range of a satellite beam. For example, the plurality of areas may include an adjacent beam handover area and a non-beam handover area. In another example, the plurality of areas may include an edge area, the adjacent beam handover area, and the non-beam handover area. FIG. 11 is a schematic diagram of possible beam area division 600 according to an embodiment of this application.

A range covered by the satellite beam at a moment T0 in FIG. 11 is shown in 610. As the satellite beam and the coverage range change, at a moment T1, the beam covers an area shown in 620, and at a moment T2, the beam covers an area shown in 630. A switching time (T1-T2) of beams 610 and 620 is a shortest random access duration of the terminal device. An area A is denoted as an edge region. Because an access time consumption is at least (T1-T0), a terminal device located in the area cannot successfully access a current beam once through contention-based random access, and these terminal devices choose to directly access a next beam or back off accessing a next beam. An area B is denoted as an adjacent beam handover area. A terminal located in the area needs to complete contention-based random access in a limited time to access a network. Otherwise, an access request is lost, and a larger access delay is generated. An area C is denoted as a non-beam handover area. An access time of a terminal located in the area is sufficient, and the terminal may initiate contention-based random access based on a normal procedure.

Optionally, the first communication apparatus determines the first area based on a coverage area of a first beam and a coverage area of a second beam. The first beam is a beam covering a current location of the first communication apparatus, and the second beam is a beam covering the current location of the first communication apparatus in a next period.

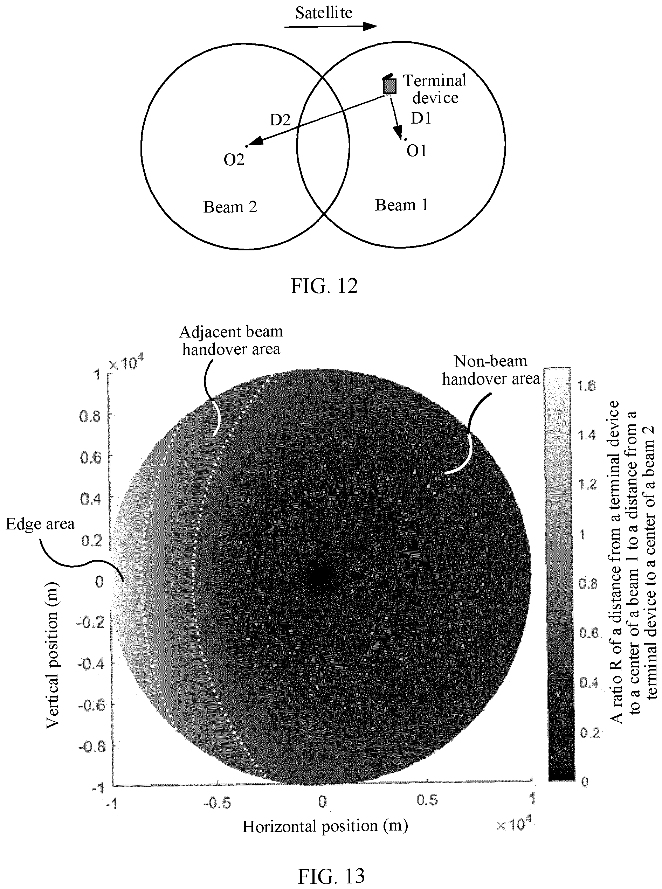

Specifically, the terminal device may determine an area in which the terminal device is located based on the coverage area of the first beam and the coverage area of the second beam. FIG. 12 is a schematic diagram of a location of a first communication apparatus according to an embodiment of this application. It should be understood that the method for determining an area in which a terminal device is located may be applied to the method 500 shown in FIG. 10.

For example, the determining a first area in the method 500 includes:

S511. The terminal device selects, by measuring beam energy, a beam (denoted as a beam 1) on which initial access is to be performed.

S512. The terminal device acquires satellite ephemeris information and a subsequently arrived beam index number (denoted as a beam 2) through a broadcast message.

S513. The terminal device acquires location information of the terminal device by using manners such as a GNSS, multi-satellite assisted positioning, or the like.

It should be noted that the terminal device may acquire the beam index number and the location information of the terminal device in advance, that is, may perform steps S512 and S513 before the step of determining the first area in the method 500.

S514. The terminal calculates a distance D1 from the terminal to a center of the beam 1 and a distance D2 from the terminal to a center of the beam 2 based on positioning information and ephemeris information.

Optionally, when the satellite beam is an elliptical beam, D1 and D2 are a sum of distances to two focal points of the beam.

S515. The terminal device determines an area in which the terminal device is located based on a threshold indicated by the network device.

Optionally, the terminal device may calculate R=D1/D2, and determine, based on a value relationship between R and two-level thresholds L1 and L2, an area in which the terminal device is located. Specifically, $R \in [L1, +\infty)$ represents that the terminal device is located in an edge region; $R \in [L2,L1)$ represents that the terminal device is located in an adjacent beam handover area; and another case represents that the terminal device is located in a non-beam handover area. It should be understood that the thresholds L1 and L2 may be indicated by the network device through system information (SIB) or RRC signaling. It should be further understood that the network device may determine the thresholds L1 and L2 based on system features such as a beam size and a beam distribution status, and an actual load status.

For example, center coordinates of a circular beam 1 are O1 (0,0), center coordinates of a circular beam 2 are O2 (-16000, 0), and a beam radius is 10 km; and R calculated at any location in a range of the beam 1 is D1/D2. As shown in FIG. 13, thresholds indicated by the network device are L1=12 and L2=0.6. FIG. 13 is a schematic diagram of possible beam area division according to an embodiment of this application.

S520. The first communication apparatus determines a first access resource corresponding to the first area in which the first communication apparatus is currently located.

Optionally, the access resource may be a time-frequency resource PO of a physical random access channel.

Optionally, the access resource may alternatively be a total quantity of preamble sequences.

Optionally, the access resource may be the time-frequency resource PO of the physical random access channel and the total quantity of preamble sequences.

It should be noted that the plurality of access resources are access resources divided by the network device. The network device may determine a parameter of a dedicated access resource of the beam handover area based on factors such as different area proportions, a system load, and user distribution, and indicate related parameters of the access resources of the beam handover area to the terminal. For example, an optional division manner performed by the network device is dividing some contention-based random access preamble sequences into dedicated preamble sequences for the beam handover area. In another example, another optional division manner performed by the network device is dividing a part of all available PRACH time-frequency resources as a beam handover area-dedicated PRACH time-frequency resource.

Optionally, the terminal device receives first indication information sent by the network device. The first indication information is used for indicating a mapping relationship between a plurality of areas and a plurality of access resources. For example, the beam handover area may correspond to a dedicated preamble sequence, or the beam handover area may correspond to the dedicated preamble sequence and a non-dedicated preamble sequence. In another example, the beam handover area may correspond to a dedicated PRACH time-frequency resource, or the beam handover area may correspond to the dedicated PRACH time-frequency resource and a PRACH time-frequency resource of the non-beam handover area.

Optionally, the network device newly adds a piece of signaling to an RACH configuration message of an SIB 1, to indicate a quantity of random access preamble sequences of the beam handover area. For example, HandoverCB-PreamblesPerSSB signaling is added to RACH configuration information (RACH-ConfigGommon), and a corresponding type of the signaling is INTEGER (0..63).

Optionally, the network device newly adds a piece of signaling to the RACH configuration message of the SIB1, to indicate a quantity of dedicated PRACH time-frequency resources of the beam handover area. For example, HandoverRO signaling is added to the RACH configuration information (RACH-ConfigGommon), and a corresponding type of the signaling is ENUMERATED {oDot0, oDot1, oDot2, oDot3, oDot4}, where oDot1, oDot2, ... represent 0.1, 0.2, and so on. Decimals are used to represent proportional division.

S530. The first communication apparatus performs random access by using the first access resource.

It should be understood that the terminal device in the beam handover area may perform random access based on an access resource configured by the network device. For example, the first access resource used by the terminal device may be a dedicated preamble sequence and a non-dedicated preamble sequence, or a dedicated preamble sequence.

A terminal located in an adjacent beam handover area has a high access priority due to an access time limitation. A network side considers, based on an actual situation, tilting allocation of an access resource toward the adjacent beam handover area, so that an average access time of all terminals in a beam is short and there is similar access experience.

In the method 500 shown in FIG. 10, a method for dividing access resources is provided in which a terminal selects a corresponding access resource based on positioning information and initiates a contention-based random access process, thereby optimizing a configuration of the access resource. The network side considers, based on an actual situation, tilting allocation of an access resource towards the adjacent beam handover area, so that an average access time of all terminals in a beam is short and there is similar access experience. In addition, a GNSS terminal may determine, based on indication information on the network side, an area in which the GNSS terminal is located by using a simple method, and select a corresponding access resource. The network side may further identify an access request of a handover area through the access resource, and may further optimize an access manner of the handover area by using a dedicated backoff algorithm and a backoff indication.

It should be further understood that the foregoing examples are merely examples for description, and do not constitute a limit to this embodiment of this application. For example, an execution body of this embodiment of this application may alternatively be a chip or a chip system having a communication function.

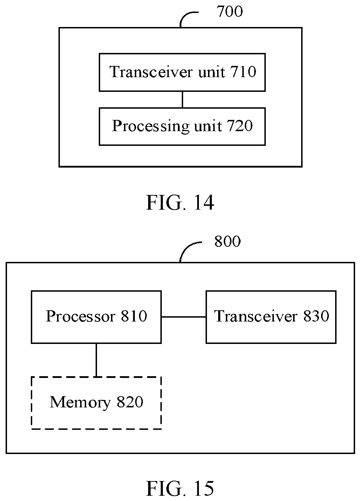

FIG. 14 is a schematic block diagram of a communication apparatus 700 according to an embodiment of this application. The apparatus 700 includes a transceiver unit 710 and a processing unit 720. The transceiver unit 710 may communicate with the outside, and the processing unit 720 is configured to process data. The transceiver unit 710 may also be referred to as a communication interface or a communication unit.

Optionally, the apparatus 700 may further include a storage unit. The storage unit may be configured to store instructions and/or data. The processing unit 720 may read the instructions and/or the data in the storage unit.

The apparatus 700 may be configured to perform an action performed by the first communication apparatus in the foregoing method embodiments. In this case, the apparatus 700 may be a terminal device or a component or a chip configured in the terminal device. The transceiver unit 710 is configured to perform a receiving/sending-related operation on a first communication apparatus side in the foregoing method embodiments. The processing unit 720 is configured to perform a processing-related operation on the first communication apparatus side in the foregoing method embodiments.

For example, the processing unit 720 is configured to determine a first quantity N. The first quantity is a total quantity of to-be-generated preamble sequences, the first quantity N is one of total quantities of at least two types of preamble sequences, and N is a positive integer. The processing unit 720 is further configured to generate N preamble sequences based on the first quantity N and a first cyclic shift value. The transceiver unit 710 is configured to send a first preamble sequence. The first preamble sequence is one of the N preamble sequences, and the first preamble sequence is used for performing random access. The transceiver unit 710 is further configured to receive a first index sent by the network device. The transceiver unit 710 is further configured to receive first indication information sent by the network device.

Alternatively, the apparatus 700 may be configured to perform an action performed by the second communication apparatus (for example, the network device) in the foregoing method embodiments. In this case, the apparatus 700 may be a network device, a satellite, or a component that may be configured on the satellite. The transceiver unit 710 is configured to perform a receiving/sending-related operation on a satellite side (that is, the network device) in the foregoing method embodiments. The processing unit 720 is configured to perform operations related to processing on the satellite side (that is, the network device) in the foregoing method embodiments.

For example, the transceiver unit 710 is configured to send the first index. The transceiver unit 710 is further configured to send a first coefficient to the first communication apparatus. The processing unit 720 is configured to determine a first quantity N. The first quantity is a total quantity of to-be-generated preamble sequences, the first quantity N is one of at least two types of total quantities of preamble sequences, and N is a positive integer. The processing unit 720 is further configured to determine a first cyclic shift value. The first cyclic shift value is used by the first communication apparatus to generate N preamble sequences. The processing unit 720 is further configured to detect a first preamble sequence sent by a second communication apparatus that performs random access based on the first quantity N and the first cyclic shift value.

As shown in FIG. 15, an embodiment of this application further provides a communication apparatus 800. The communication apparatus 800 includes a processor 810. The processor 810 is coupled to a memory 820. The memory 820 is configured to store a computer program or instructions and/or data. The processor 810 is configured to execute the computer program or instructions and/or the data stored in the memory 820, so that the methods in the foregoing method embodiments are executed.

Optionally, the communication apparatus 800 includes one or more processors 810.

Optionally, as shown in FIG. 15, the communication apparatus 800 may further include the memory 820.

Optionally, the communication apparatus 800 may include one or more memories 820.

Optionally, the memory 820 may be integrated with the processor 810, or separately disposed.

Optionally, as shown in FIG. 15, the wireless communication apparatus 800 may further include a transceiver 830. The transceiver 830 is configured to receive and/or send a signal. For example, the processor 810 is configured to control the transceiver 830 to receive and/or send a signal.

In a solution, the communication apparatus 800 is configured to implement an operation performed by a satellite or a ground station in a satellite system in the foregoing method embodiments.

For example, the processor 810 is configured to implement a processing-related operation performed by the satellite in the foregoing method embodiments, and the transceiver 830 is configured to implement a receiving/sending-related operation performed by the satellite in the foregoing method embodiments.

For example, the transceiver 830 may be configured to send the first index. The transceiver 830 is further configured to send the first coefficient to the first communication apparatus. The processor 810 is configured to determine a first quantity N. The first quantity is a total quantity of to-be-generated preamble sequences, the first quantity N is one of at least two types of total quantities of preamble sequences, and N is a positive integer. The processor 810 is further configured to determine a first cyclic shift value. The first cyclic shift value is used by the first communication apparatus to generate N preamble sequences. The processor 810 is further configured to detect a first preamble sequence sent by the first communication apparatus that performs random access based on the first quantity N and the first cyclic shift value. In another solution, the communication apparatus 800 is configured to implement an operation performed by the terminal device (that is, the first communication apparatus) in the foregoing method embodiments.

For example, the processor 810 is configured to perform a processing-related operation performed by the terminal device in the foregoing method embodiments, and the transceiver 830 is configured to perform a receiving/sending-related operation performed by the terminal device in the foregoing method embodiments.

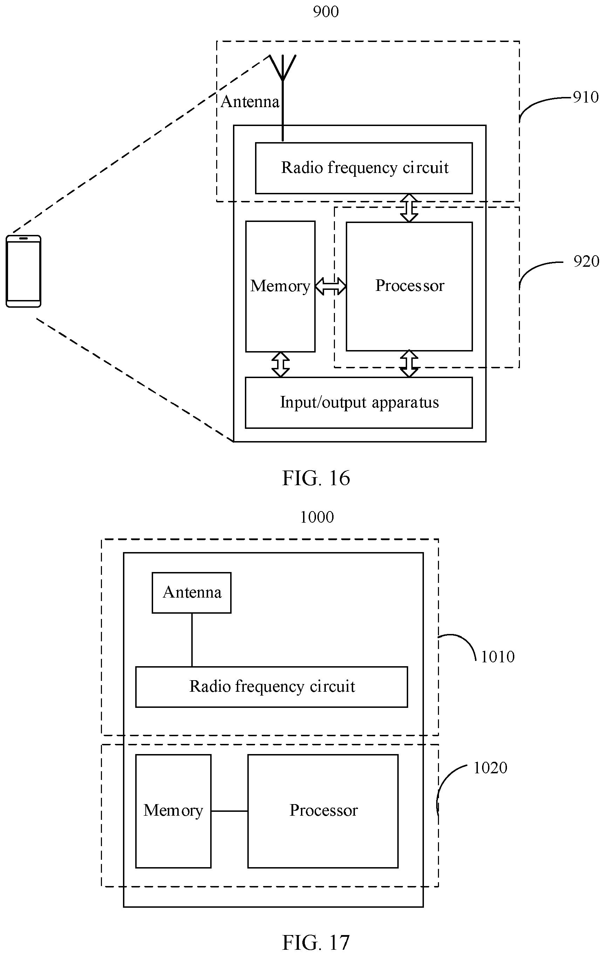

For example, the processor 810 is configured to determine a first quantity N. The first quantity is a total quantity of to-be-generated preamble sequences, the first quantity N is one of at least two types of total quantities of preamble sequences, and N is a positive integer. The processor 810 is further configured to generate N preamble sequences based on the first quantity N and a first cyclic shift value. The transceiver 830 is configured to send a first preamble sequence. The first preamble sequence is one of N preamble sequences, and the first preamble sequence is used for performing random access. The transceiver 830 is further configured to receive a first index sent by the network device. The transceiver 830 is further configured to receive first indication information sent by the network device. An embodiment of this application further provides a communication apparatus 900. The communication apparatus 900 may be a terminal device or a chip. The communication apparatus 900 may be configured to perform an operation performed by the first communication apparatus in the foregoing method embodiments. When the communication apparatus 900 is a terminal device, FIG. 16 is a schematic structural diagram of a simplified first communication apparatus. For ease of understanding and ease of illustration, in FIG. 16, a mobile phone is used as an example of the terminal device. As shown in FIG. 16, the terminal device includes a processor, a memory, a radio frequency circuit, an antenna, and an input/output apparatus. The processor is mainly configured to process a communication protocol and communication data, control the terminal device, execute a software program, process data of the software program, and the like. The memory is mainly configured to store a software program and data. The radio frequency circuit is mainly configured to perform conversion between a baseband signal and a radio frequency signal and process the radio frequency signal. The antenna is mainly configured to receive and send radio frequency signals in a form of an electromagnetic wave. The input/output apparatus, for example, a touchscreen, a display, or a keyboard, is mainly configured to receive data entered by a user and output data to the user. It should be noted that some types of terminal devices may have no input/output apparatus.

When data needs to be sent, the processor performs baseband processing on the to-be-sent data, and then outputs a baseband signal to the radio frequency circuit. The radio frequency circuit performs radio frequency processing on the baseband signal and then sends a radio frequency signal to the outside in a form of an electromagnetic wave through the antenna. When data is sent to the terminal device, the radio frequency circuit receives a radio frequency signal through the antenna, converts the radio frequency signal into a baseband signal, and outputs the baseband signal to the processor, and the processor converts the baseband signal into data and processes the data. For ease of description, FIG. 16 shows only one memory and one processor. In an actual terminal device product, there may be one or more processors and one or more memories. The memory may also be referred to as a storage medium, a storage device, or the like. The memory may be disposed independent of the processor, or may be integrated with the processor. This is not limited in this embodiment of this application.

In this embodiment of this application, the antenna and the radio frequency circuit that have receiving and sending functions may be considered as a transceiver unit of the terminal device, and the processor that has a processing function may be considered as a processing unit of the terminal device.

As shown in FIG. 16, the terminal device includes a transceiver unit 910 and a processing unit 920. The transceiver unit 910 may also be referred to as a transceiver, a transceiver machine, a transceiver apparatus, or the like. The processing unit 920 may also be referred to as a processor, a processing board, a processing module, a processing apparatus, or the like.

Optionally, a component that is in the transceiver unit 910 and that is configured to implement a receiving function may be considered as a receiving unit, and a component that is in the transceiver unit 910 and that is configured to implement a sending function may be considered as a sending unit. In other words, the transceiver unit 910 includes the receiving unit and the sending unit. The transceiver unit sometimes may also be referred to as a transceiver machine, a transceiver, a transceiver circuit, or the like. The receiving unit sometimes may also be referred to as a receiver machine, a receiver, a receiver circuit, or the like. The sending unit may also be sometimes referred to as a transmitting machine, a transmitter, a transmit circuit, or the like.

For example, in an implementation, the transceiver unit 910 is configured to perform a receiving operation of the terminal device. The processing unit 920 is configured to perform a processing action on a terminal device side.

It should be understood that FIG. 16 is merely an example rather than a limitation. The foregoing terminal device (an example of the first communication apparatus) including the transceiver unit and the processing unit may not depend on the structure shown in FIG. 16.

When the communication apparatus 900 is a chip, the chip includes a transceiver unit and a processing unit. The transceiver unit may be an input/output circuit or a communication interface. The processing unit may be a processor, a microprocessor, or an integrated circuit that is integrated on the chip. The input circuit may be an input pin. The output circuit may be an output pin. The processing circuit may be a transistor, a gate circuit, a trigger, any logic circuit, or the like. An input signal received by the input circuit may be received and input by, for example, but not limited to, a receiver. A signal outputted by the output circuit may be outputted to, for example, but not limited to, a transmitter and transmitted by the transmitter. In addition, the input circuit and the output circuit may be different circuits. Alternatively, the input circuit and the output circuit may be a same circuit. In this case, the circuit is used as the input circuit and the output circuit at different moments.

An embodiment of this application further provides a communication apparatus 1000. The communication apparatus 1000 may be a satellite or a chip. The communication apparatus 1000 may be configured to perform an operation performed by the satellite in the foregoing method embodiments.

When the communication apparatus 1000 is a satellite, for example, a satellite base station, FIG. 17 is a schematic structural diagram of a simplified base station. The base station includes a part 1010 and a part 1020. The part 1010 is mainly configured to send and receive a radio frequency signal, and perform conversion between the radio frequency signal and a baseband signal. The part 1020 is mainly configured to perform baseband processing, control the base station, and so on. The part 1010 may usually be referred to as a transceiver unit, a transceiver circuit, a transceiver, or the like. The part 1020 is usually a control center of the base station, and may usually be referred to as a processing unit, configured to control the base station to perform processing operations on a network device side in the foregoing method embodiments.

The transceiver unit in the part 1010 may also be referred to as a transceiver or the like. The transceiver unit includes an antenna and a radio frequency circuit, where the radio frequency circuit is mainly configured to perform radio frequency processing. Optionally, a component that is in the part 1010 and that is configured to implement a receiving function may be considered as a receiving unit, and a component that is in the part 1010 and that is configured to implement a sending function may be considered as a sending unit. In other words, the part 1010 includes the receiving unit and the sending unit. The receiving unit may also be referred to as a receiver machine, a receiver, a receiver circuit, or the like. The sending unit may be referred to as a transmitter machine, a transmitter, a transmitter circuit, or the like.

The part 1020 may include one or more boards, and each board may include one or more processors and one or more memories. The processor is configured to read and execute a program in the memory to implement a baseband processing function and control the base station. If there are a plurality of boards, the boards may be interconnected with each other to enhance a processing capability. In an optional implementation, a plurality of boards may share one or more processors, a plurality of boards may share one or more memories, or a plurality of boards may simultaneously share one or more processors.

For example, in an implementation, the transceiver unit in the part 1010 is configured to perform a receiving/sending-related step performed by the satellite in the embodiment, and the part 1020 is configured to perform a processing-related step performed by the satellite.

It should be understood that FIG. 17 is merely an example instead of a limitation. The network device including the transceiver unit and the processing unit may not depend on the structure shown in FIG. 17.

When the communication apparatus 1000 is a chip, the chip includes a transceiver unit and a processing unit. The transceiver unit may be an input/output circuit or a communication interface. The processing unit is a processor, a microprocessor, or an integrated circuit integrated on the chip. The input circuit may be an input pin. The output circuit may be an output pin. The processing circuit may be a transistor, a gate circuit, a trigger, any logic circuit, or the like. An input signal received by the input circuit may be received and input by, for example, but not limited to, a receiver. A signal outputted by the output circuit may be outputted to, for example, but not limited to, a transmitter and transmitted by the transmitter. In addition, the input circuit and the output circuit may be different circuits. Alternatively, the input circuit and the output circuit may be a same circuit. In this case, the circuit is used as the input circuit and the output circuit at different moments.

An embodiment of this application further provides a computer-readable storage medium. The computer-readable medium stores computer instructions used for implementing the method performed by the terminal device or the method performed by the satellite in the foregoing method embodiments

For example, when the computer program is executed by a computer, the computer is enabled to implement the method performed by the terminal device or the method performed by the satellite in the foregoing method embodiments.

An embodiment of this application further provides a computer program product including instructions. When the instructions are executed by a computer, the computer is enabled to implement the method performed by the terminal device or the method performed by the network device in the foregoing method embodiments.

An embodiment of this application further provides a communication system. The communication system includes the satellite and the terminal device in the foregoing embodiments.

In an example, the communication system includes the satellite and the terminal device in the foregoing embodiments.

For explanations and beneficial effects of related content of any of the wireless communication apparatuses provided above, refer to the corresponding method embodiment provided above. Details are not described herein again.

In this embodiment of this application, the terminal device or the network device may include a hardware layer, an operating system layer running above the hardware layer, and an application layer running above the operating system layer. The hardware layer may include hardware such as a central processing unit (central processing unit, CPU), a memory management unit (memory management unit, MMU), and a memory (also referred to as a primary memory). An operating system at the operating system layer may be any one or more computer operating systems that implement service processing through a process (process), for example, a Linux operating system, a Unix operating system, an Android operating system, an iOS operating system, or a Windows operating system. The application layer may include applications such as a browser, an address book, word processing software, and instant messaging software.

A specific structure of an execution body of a method provided in embodiments of this application is not specifically limited in embodiments of this application, provided that a program that records code for the method provided in embodiments of this application can be run to perform communication according to the method provided in the embodiments of this application. For example, an execution entity of the method provided in the embodiments of this application may be a terminal device or a satellite, or a functional module in the terminal device or satellite that may invoke a program and execute the program.

Aspects or features in embodiments of this application may be implemented as a method, an apparatus, or a product that uses standard programming and/or engineering technologies. The term "product" used in this specification may cover a computer program that can be accessed from any computer-readable component, carrier or medium. For example, the computer-readable medium may include but is not limited to a magnetic storage component (for example, a hard disk, a floppy disk, or a magnetic tape), an optical disc (for example, a compact disc (compact disc, CD), or a digital versatile disc (digital versatile disc, DVD)), a smart card, and a flash memory component (for example, an erasable programmable read-only memory (erasable programmable read-only memory, EPROM), a card, a stick, or a key drive).

Various storage media described in this specification may indicate one or more devices and/or other machine-readable media that are configured to store information. The term "machine-readable media" may include but is not limited to a radio channel and various other media that can store, include, and/or carry instructions and/or data.

It should be understood that the processor mentioned in embodiments of this application may be a central processing unit (central processing unit, CPU), or the processor may be another general-purpose processor, a digital signal processor (digital signal processor, DSP), an application-specific integrated circuit (application-specific integrated circuit, ASIC), a field programmable gate array (field programmable gate array, FPGA) or another programmable logic device, a discrete gate or transistor logic device, a discrete hardware component, or the like. A general purpose processor may be a microprocessor or the processor may be any conventional processor and the like.

It may be further understood that the memory mentioned in the embodiments of this application may be a volatile memory or a nonvolatile memory, or may include a volatile memory and a nonvolatile memory. The nonvolatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM). For example, the RAM may be used as an external cache. As an example instead of a limitation, the RAM may include the following plurality of forms: a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus dynamic random access memory (direct rambus RAM, DR RAM).

It should be noted that when the processor is a general-purpose processor, a DSP, an ASIC, an FPGA or another programmable logic device, a discrete gate, a transistor logic device, or a discrete hardware component, the memory (storage module) may be integrated into the processor.

It should further be noted that the memory described in this specification aims to include but is not limited to these memories and any memory of another proper type.

A person of ordinary skill in the art may be aware that, in combination with the examples described in embodiments disclosed in this specification, units and algorithm steps may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of embodiments of this application.

It may be clearly understood by a person skilled in the art that, for the purpose of convenient and brief description, for a detailed working process of the foregoing system, apparatus, and unit, refer to a corresponding process in the foregoing method embodiments, and details are not described herein again.

In the several embodiments provided in embodiments of this application, it should be understood that the disclosed system, apparatuses, and method may be implemented in other manners. For example, the described apparatus embodiment is merely an example. For example, division into the units is merely logical function division and may be other division in actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electrical, mechanical, or another form.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions of embodiments.

In addition, functional units in embodiments of this application may be integrated into one processing unit, each of the units may exist alone physically, or two or more units may be integrated into one unit.

When the functions are implemented in the form of a software functional unit and sold or used as an independent product, the functions may be stored in a computer-readable storage medium. Based on such an understanding, the technical solutions of embodiments of this application essentially, or the part contributing to the conventional technology, or a part of the technical solutions may be implemented in a form of a software product. The computer software product is stored in a storage medium, and includes several instructions for instructing a computer device (which may be a personal computer, a server, a network device, or the like) to perform all or a part of the steps of the methods described in embodiments of this application. The foregoing storage medium includes: any medium that can store program code, such as a USB flash drive, a removable hard disk, a read-only memory (Read-Only Memory, ROM), a random access memory (Random Access Memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in embodiments of this application shall fall within the protection scope of this application. Therefore, the protection scope of this application shall be subject to the protection scope of the claims.

**Claims**

1. A wireless communication method, comprising:

   determining, by a first communication apparatus, a first quantity N, wherein the first quantity is a total quantity of to-be-generated preamble sequences, the first quantity N is one of total quantities of at least two types of preamble sequences, and N is a positive integer;
   generating, by the first communication apparatus, N preamble sequences based on the first quantity N and a first cyclic shift value; and
   sending, by the first communication apparatus, a first preamble sequence, wherein the first preamble sequence is one of the N preamble sequences, and the first preamble sequence is used for performing random access.

2. The method according to claim 1, further comprising:
   receiving, by the first communication apparatus, a first index sent by a network device; determining, by the first communication apparatus, a second cyclic shift value based on the first index and a first correspondence, wherein the first correspondence is used for indicating a mapping relationship between the first index and the second cyclic shift value; and determining, by the first communication apparatus, the first cyclic shift value based on a first coefficient and the second cyclic shift value.

3. The method according to claim 2, wherein

   the first coefficient is specified in a communication protocol; or
   the first coefficient is indicated by the network device.

4. The method according to claim 1, further comprising:
   receiving, by the first communication apparatus, a first index sent by a network device; and determining, by the first communication apparatus, the first cyclic shift value based on the first index, a first parameter, and a second correspondence, wherein the second correspondence is used for indicating a mapping relationship between the first index and a first cyclic shift value group, the first cyclic shift value group comprises at least two cyclic shift values, the first parameter is used for determining the first cyclic shift value from the at least two cyclic shift values, and the first parameter is used for indicating a positioning precision currently used by the first communication apparatus or a currently to-be-accessed system.

5. The method according to any one of claims 2 to 4, wherein the method further comprises:

   receiving, by the first communication apparatus, first indication information sent by the network device; and
   the determining, by a first communication apparatus, a first quantity N comprises:
   determining, by the first communication apparatus, the first quantity N based on the first indication information.

6. The method according to any one of claims 1 to 5, wherein the first quantity is greater than or equal to a second quantity, and the second quantity is a total quantity of preamble sequences generated when the first communication apparatus communicates with a terrestrial network; and/or
   the first cyclic shift value is less than or equal to the second cyclic shift value, wherein the second cyclic shift value is a cyclic shift value used for generating a preamble sequence when the first communication apparatus communicates with the terrestrial network.

7. The method according to any one of claims 1 to 6, wherein N is one of 64, 128, 256, or 512.

8. The method according to any one of claims 1 to 7, wherein before the generating, by the first communication apparatus, N preamble sequences based on the first quantity N and a first cyclic shift value, the method further comprises:
   determining, by the first communication apparatus, that the first cyclic shift value meets a requirement of the current positioning precision of the first communication apparatus on a cyclic shift value.

9. The method according to any one of claims 1 to 8, wherein the first preamble sequence is used by the first communication apparatus to perform random access on a first time domain resource, wherein

   a first time-frequency resource corresponds to the first cyclic shift value; or

a first time-frequency resource corresponds to the current positioning precision of the first communication apparatus; or

a first time-frequency resource corresponds to a system to be accessed by the first communication apparatus; or

a first time-frequency resource corresponds to the first quantity.

10. The method according to any one of claims 1 to 9, wherein

the first quantity is determined based on a positioning precision of a historically accessed terminal device of a network device to be accessed by the first communication apparatus; and/or

the first cyclic shift value is determined based on the positioning precision of the historically accessed terminal device of the network device to be accessed by the first communication apparatus.

11. A wireless communication method, comprising:

determining, by a second communication apparatus, a first quantity N, wherein the first quantity is a total quantity of to-be-generated preamble sequences, the first quantity N is one of total quantities of at least two types of preamble sequences, and N is a positive integer;

determining, by the second communication apparatus, a first cyclic shift value, wherein the first cyclic shift value is used by a first communication apparatus to generate N preamble sequences; and

detecting, by the second communication apparatus, a first preamble sequence sent by the first communication apparatus that performs random access based on the first quantity N and the first cyclic shift value, wherein the first preamble sequence is one of the N preamble sequences.

12. The method according to claim 11, further comprising:
sending, by the second communication apparatus, a first index, wherein the first index is used for indicating a second cyclic shift value, and the first index and the second cyclic shift value meet a first correspondence.

13. The method according to claim 12, further comprising:
sending, by the second communication apparatus, a first coefficient to the first communication apparatus, wherein the first coefficient is used for determining the first cyclic shift value based on the second cyclic shift value.

14. The method according to claim 11, further comprising:
sending, by the second communication apparatus, a first index to the first communication apparatus, wherein the first index is used for indicating a first cyclic shift value group, the first index and the first cyclic shift value group meet a second correspondence, the first cyclic shift value group comprises at least two cyclic shift values, the at least two cyclic shift values comprise the first cyclic shift value, the first cyclic shift value corresponds to a first parameter, and the first parameter is used for indicating a positioning precision or a to-be-accessed system.

15. The method according to any one of claims 11 to 14, wherein the method further comprises:
sending, by the second communication apparatus, first indication information to the first communication apparatus, wherein the first indication information is used for determining the first quantity N.

16. The method according to any one of claims 11 to 15, wherein

the first quantity is greater than or equal to a second quantity, and the second quantity is a total quantity of preamble sequences generated when the first communication apparatus communicates with a terrestrial network; and/or

the first cyclic shift value is less than or equal to the second cyclic shift value, wherein the second cyclic shift value is a cyclic shift value used for generating a preamble sequence when the first communication apparatus communicates with the terrestrial network.

17. The method according to any one of claims 11 to 16, wherein N is one of 64, 128, 256, or 512.

18. The method according to any one of claims 11 to 17, wherein the method further comprises:

allocating, by the second communication apparatus, a first time domain resource, wherein the first time domain resource is used by the first communication apparatus to perform random access, wherein

a first time-frequency resource corresponds to the first cyclic shift value; or

a first time-frequency resource corresponds to the current positioning precision of the first communication apparatus; or

a first time-frequency resource corresponds to a system to be accessed by the first communication apparatus; or

a first time-frequency resource corresponds to the first quantity.

19. The method according to any one of claims 11 to 18, wherein

the first quantity is determined based on a positioning precision of a historically accessed terminal device of a network device to be accessed by the first communication apparatus; and/or

the first cyclic shift value is determined based on the positioning precision of the historically accessed terminal device of the network device to be accessed by the first communication apparatus.

20. A communication apparatus, comprising:

a processing unit, configured to determine a first quantity N, wherein the first quantity is a total quantity of to-be-generated preamble sequences, the first quantity N is one of total quantities of at least two types of preamble sequences, and N is a positive integer;

the processing unit being further configured to generate N preamble sequences based on the first quantity N and a first cyclic shift value; and

a transceiver unit, configured to send a first preamble sequence, wherein the first preamble sequence is one of the N preamble sequences, and the first preamble sequence is used for performing random access.

21. The apparatus according to claim 20, wherein the transceiver unit is further configured to receive a first index sent by a network device;

the processing unit is further configured to determine a second cyclic shift value based on the first index and a first correspondence, wherein the first correspondence is used for indicating a one-to-one mapping relationship between the first index and the second cyclic shift value; and

the processing unit is further configured to determine the first cyclic shift value based on a first coefficient and the second cyclic shift value.

22. The apparatus according to claim 21, wherein the first coefficient is specified in a communication protocol; or the first coefficient is indicated by the processing unit.

23. The apparatus according to claim 20, wherein the transceiver unit is further configured to receive a first index sent by a network device; and

the processing unit is further configured to determine the first cyclic shift value based on the first index, a first parameter, and a second correspondence, wherein the second correspondence is used for indicating a mapping relationship between the first index and a first cyclic shift value group, the first cyclic shift value group comprises at least two cyclic shift values, the first parameter is used for determining the first cyclic shift value from the at least two cyclic shift values, and the first parameter is used for indicating a positioning precision currently used by the processing unit or a currently to-be-accessed system.

24. The apparatus according to any one of claims 21 to 23, wherein the transceiver unit is further configured to receive first indication information sent by the network device; and the processing unit determines the first quantity N based on the first indication information.

25. The apparatus according to any one of claims 20 to 24, wherein the first quantity is greater than or equal to a second quantity, and the second quantity is a total quantity of preamble sequences generated when the first communication apparatus communicates with a terrestrial network; and/or

the first cyclic shift value is less than or equal to the second cyclic shift value, wherein the second cyclic shift value is a cyclic shift value used for generating a preamble sequence when the first communication apparatus communicates with the terrestrial network.

26. The apparatus according to any one of claims 20 to 25, wherein N is one of 64, 128, 256, or 512.

27. The apparatus according to any one of claims 20 to 26, wherein before the processing unit generates the N preamble sequences based on the first quantity N and the first cyclic shift value, the processing unit is further configured to determine that the first cyclic shift value meets a requirement of the current positioning precision of the processing unit on a cyclic shift value.

28. The apparatus according to any one of claims 20 to 27, wherein the first preamble sequence is used by the communication apparatus to perform random access on a first time domain resource, wherein

   a first time-frequency resource corresponds to the first cyclic shift value; or
   a first time-frequency resource corresponds to the current positioning precision of the first communication apparatus; or
   a first time-frequency resource corresponds to a system to be accessed by the first communication apparatus; or
   a first time-frequency resource corresponds to the first quantity.

29. The apparatus according to any one of claims 20 to 28, wherein the first quantity is determined based on a positioning precision of a historically accessed terminal device of a network device to be accessed by the processing unit; and/or the first cyclic shift value is determined based on the positioning precision of the historically accessed terminal device of the network device to be accessed by the processing unit.

30. A communication apparatus, comprising:

   a processing unit, configured to determine a first quantity N, wherein the first quantity is a total quantity of to-be-generated preamble sequences, the first quantity N is one of total quantities of at least two types of preamble sequences, and N is a positive integer; and
   the processing unit is further configured to determine a first cyclic shift value, wherein the first cyclic shift value is used by a first communication apparatus to generate N preamble sequences; and
   a transceiver unit, configured to receive a first preamble sequence sent by the first communication apparatus, wherein the first preamble sequence is one of the N preamble sequences; and
   the first quantity N and the first cyclic shift value are used by the communication apparatus to detect the first preamble sequence.

31. The apparatus according to claim 30, wherein the transceiver unit is further configured to send a first index, wherein the first index is used for indicating a second cyclic shift value, and the first index and the second cyclic shift value meet a first correspondence.

32. The apparatus according to claim 31, wherein the transceiver unit is further configured to send a first coefficient to the first communication apparatus, wherein the first coefficient is used for determining the first cyclic shift value based on the second cyclic shift value.

33. The apparatus according to claim 30, wherein the transceiver unit is further configured to send a first index to the first communication apparatus, wherein the first index is used for indicating a first cyclic shift value group, the first index and the first cyclic shift value group meet a second correspondence, the first cyclic shift value group comprises at least two cyclic shift values, the at least two cyclic shift values comprise the first cyclic shift value, the first cyclic shift value corresponds to a first parameter, and the first parameter is used for indicating a positioning precision or a to-be-accessed system.

34. The apparatus according to any one of claims 31 to 33, wherein the transceiver unit is further configured to send first indication information to the first communication apparatus, wherein the first indication information is used for indicating the first quantity N.

35. The apparatus according to any one of claims 30 to 34, wherein the first quantity is greater than or equal to a second quantity, and the second quantity is a total quantity of preamble sequences generated when the first communication apparatus communicates with a terrestrial network; and/or the first cyclic shift value is less than or equal to the second cyclic shift value, wherein the second cyclic shift value is a cyclic shift value used for generating a preamble sequence when the first communication apparatus communicates with the terrestrial network.

36. The apparatus according to any one of claims 30 to 35, wherein N is one of 64, 128, 256, or 512.

37. The apparatus according to any one of claims 30 to 36, wherein the processing unit is further configured to allocate a first time domain resource, and the first time domain resource is used by the first communication apparatus to perform random access, wherein

a first time-frequency resource corresponds to the first cyclic shift value; or
a first time-frequency resource corresponds to the current positioning precision of the first communication apparatus; or
a first time-frequency resource corresponds to a system to be accessed by the first communication apparatus; or
a first time-frequency resource corresponds to the first quantity.

38. The apparatus according to any one of claims 30 to 37, wherein the first quantity is determined based on a positioning precision of a historically accessed terminal device of a network device to be accessed by the first communication apparatus; and/or
the first cyclic shift value is determined based on the positioning precision of the historically accessed terminal device of the network device to be accessed by the first communication apparatus.

39. A communication apparatus, comprising a processor, wherein the processor is coupled to a memory, the memory is configured to store a computer program or instructions, and the processor is configured to execute the computer program or instructions in the memory, to cause

the method according to any one of claims 1 to 10 to be performed, or
the method according to any one of claims 11 to 19 to be performed.

40. A computer-readable storage medium, storing a computer program or instructions, wherein when the computer program or instructions are executed,

the method according to any one of claims 1 to 10 is performed, or
the method according to any one of claims 11 to 19 is performed.

41. A chip system, comprising a communication interface and a processing circuit, wherein the communication interface is configured to acquire to-be-processed data, and the processing circuit is configured to process the to-be-processed data based on the method according to any one of claims 1 to 10.

42. A chip system, comprising a communication interface and a processing circuit, wherein the processing circuit is configured to determine indication information based on the method according to any one of claims 11 to 19, and the communication interface is configured to send the indication information.

43. A computer program product comprising instructions, wherein the computer program product, when running on a computer, causes the method according to any one of claims 1 to 10 to be performed, or the method according to any one of claims 11 to 19 to be performed.

44. A computer program, wherein the computer program, when running on a computer, causes the method according to any one of claims 1 to 10 to be performed, or the method according to any one of claims 11 to 19 to be performed.

45. A communication system, comprising the communication apparatus according to any one of claims 20 to 29 and the communication apparatus according to any one of claims 30 to 38.

FIG. 1

FIG. 2

100

| First communication apparatus | | Second communication apparatus |

S110. Msg1, sending of a random preamble sequence

S120. Msg2, a random access response

S130. Msg3, terminal device identification information

S140. Msg4, a contention resolution message

FIG. 3

200

| First communication apparatus | | Second communication apparatus |

S210. Determine a first quantity N, where the first quantity is a total quantity of to-be-generated preamble sequences, the first quantity N is one of total quantities of at least two types of preamble sequences, and N is a positive integer

S220. Generate N preamble sequences based on the first quantity N and a first cyclic shift value

S230. Send a first preamble sequence, where the first preamble sequence is used for performing random access

FIG. 4

200

First communication apparatus

Second communication apparatus

S2211. Send a first index

S2212. Determine a second cyclic shift value based on the first index and a first correspondence, where the first correspondence is used for indicating a mapping relationship between the first index and the second cyclic shift value

S2213. Determine a first cyclic shift value based on a first coefficient and the second cyclic shift value

FIG. 5

200

First communication apparatus

Second communication apparatus

S2221. Send a first index

S2222. Determine a first cyclic shift value based on the first index, a first parameter, and a second correspondence

FIG. 6

300

```
┌──────────────┐                                              ┌──────────────┐
│    Second    │                                              │    First     │
│ communication│                                              │ communication│
│  apparatus   │                                              │  apparatus   │
└──────┬───────┘                                              └──────┬───────┘
       │                                                             │
       │  S310. Indicate a value of a first cyclic shift or/and a    │
       │  total quantity of first preamble sequences                 │
       │────────────────────────────────────────────────────────────▶│
       │                                                             │
       │  S320. Indicate a first PO and a second PO                  │
       │────────────────────────────────────────────────────────────▶│
       │                                                             │
```

S330. Determine a value of a third cyclic shift and a total quantity of third preamble sequences based on a second positioning precision

S340. Send Msg1 based on the first PO and the second PO

S350. Detect a preamble sequence based on the value of the third cyclic shift and the total quantity of third preamble sequences corresponding to the first PO or the second PO

S360. Deliver a random access response RAR

FIG. 7

400

| Second communication apparatus | | First communication apparatus |

S410. Indicate a value of a first cyclic shift or/and a total quantity of first preamble sequences

S420. Determine a value of a third cyclic shift and a total quantity of third preamble sequences based on a positioning precision

S430. Send a first message Msg1

S440. Detect a preamble sequence based on the value of the first cyclic shift value and the total quantity of first preamble sequences

S450. Send RAR information, where the RAR information includes a first TA value and a first RAPID

S460. Determine a second TA value based on the first TA value and the first RAPID

FIG. 8

Network device detection window (preamble sequence RAPID distribution #1)

↓ Synchronization location

| 0000000 | 0000001 | 0000010 | 0000011 | 0000100 | 0000101 | ... |

Preamble sequence RAPID distribution #2

↓ Synchronization location

| 000000 | 000001 | 000010 | ... |

FIG. 9

500 First communication apparatus

Second communication apparatus

S510. Determine a first area, where the first area is an area in which the first communication apparatus is located, and the first area is one of a plurality of areas

S520. Determine a first access resource corresponding to the first area in which the first communication apparatus is currently located, where the first access resource is at least one of a plurality of access resources

S530. Perform random access by using the first access resource

FIG. 10

600

Satellite

610    620    630

A  B       C

T0  T1  T2

FIG. 11

FIG. 12

FIG. 13

700

| Transceiver unit 710 |
| Processing unit 720 |

FIG. 14

800

| Processor 810 | Transceiver 830 |
| Memory 820 |

FIG. 15

900

Antenna

Radio frequency circuit

910

Memory

Processor

920

Input/output apparatus

FIG. 16

1000

Antenna

Radio frequency circuit

1010

Memory

Processor

1020

FIG. 17

## INTERNATIONAL SEARCH REPORT

| International application No. |
|---|
| **PCT/CN2021/110260** |

**A. CLASSIFICATION OF SUBJECT MATTER**

H04W 74/08(2009.01)i

According to International Patent Classification (IPC) or to both national classification and IPC

**B. FIELDS SEARCHED**

Minimum documentation searched (classification system followed by classification symbols)

H04W

Documentation searched other than minimum documentation to the extent that such documents are included in the fields searched

Electronic data base consulted during the international search (name of data base and, where practicable, search terms used)

CNABS; CNTXT; VEN; USTXT; EPTXT; WOTXT; CNKI; 3GPP: 前导, 序列, 总数, 数量, 循环位移, 集合, 索引, 随机接入, preamble, sequence, cyclic, shift, amount, access, index

**C. DOCUMENTS CONSIDERED TO BE RELEVANT**

| Category* | Citation of document, with indication, where appropriate, of the relevant passages | Relevant to claim No. |
|---|---|---|
| X | CN 108809597 A (BEIJING SAMSUNG TELECOM R&D CENTER et al.) 13 November 2018 (2018-11-13)<br>description, paragraphs [0022]-[0566], and figures 1-12 | 1-45 |
| A | CN 101873714 A (ZTE CORPORATION) 27 October 2010 (2010-10-27)<br>entire document | 1-45 |
| A | CN 109076598 A (FUJITSU LIMITED) 21 December 2018 (2018-12-21)<br>entire document | 1-45 |

☐ Further documents are listed in the continuation of Box C.    ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **30 September 2021** | **03 November 2021** |

| Name and mailing address of the ISA/CN | Authorized officer |
|---|---|
| **China National Intellectual Property Administration (ISA/CN)**<br>**No. 6, Xitucheng Road, Jimenqiao, Haidian District, Beijing 100088**<br>**China** | |
| Facsimile No. **(86-10)62019451** | Telephone No. |

Form PCT/ISA/210 (second sheet) (January 2015)

INTERNATIONAL SEARCH REPORT
Information on patent family members

International application No.

**PCT/CN2021/110260**

| Patent document cited in search report | | | Publication date (day/month/year) | Patent family member(s) | | | Publication date (day/month/year) |
|---|---|---|---|---|---|---|---|
| CN | 108809597 | A | 13 November 2018 | US | 2020059390 | A1 | 20 February 2020 |
| | | | | CN | 109586878 | A | 05 April 2019 |
| | | | | EP | 3636024 | A1 | 15 April 2020 |
| | | | | WO | 2018203727 | A1 | 08 November 2018 |
| | | | | IN | 201937049588 | A | 07 February 2020 |
| | | | | EP | 3636024 | A4 | 12 August 2020 |
| CN | 101873714 | A | 27 October 2010 | None | | | |
| CN | 109076598 | A | 21 December 2018 | WO | 2017185304 | A1 | 02 November 2017 |
| | | | | CN | 109076598 | B | 15 June 2021 |
| | | | | US | 10750543 | B2 | 18 August 2020 |
| | | | | US | 2019090282 | A1 | 21 March 2019 |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202010784243